# EUROPÄISCHE PATENTSCHRIFT

(11) **EP 3 407 237 B1**
(45) Veröffentlichungstag und Bekanntmachung des Hinweises auf die Patenterteilung: **29.06.2022**
(21) Anmeldenummer: 18171251.4
(22) Anmeldetag: 08.05.2018
(51) Int. Cl.: G06F 21/62, H04L 9/08, H04L 9/30

(54) **KLASSENBASIERTES VERSCHLÜSSELUNGSVERFAHREN**
CLASS-BASED ENCRYPTION METHOD
PROCÉDÉ DE CHIFFREMENT À BASE DE CLASSES

(30) Priorität: 26.05.2017 DE 102017208899
(43) Veröffentlichungstag der Anmeldung: 28.11.2018
(73) Patentinhaber: Bundesdruckerei GmbH, 10969 Berlin (DE)
(72) Erfinder: HORVATH, Olaf, 10317 Berlin (DE)
(74) Vertreter: Richardt Patentanwälte PartG mbB

(56) Entgegenhaltungen:
- US-A1- 2010 114 964
- US-A1- 2010 246 827
- US-A1- 2017 093 810
- Dan Boneh ET AL: "Identity-Based Encryption from the Weil Pairing", SIAM Journal on Computing, 1. Januar 2003 (2003-01-01), Seiten 586-615, XP055370165, Philadelphia DOI: 10.1137/S0097539701398521 Gefunden im Internet: URL:https://crypto.stanford.edu/~dabo/pape rs/bfibe.pdf

## Beschreibung

Die Erfindung betrifft ein Verfahren zum Verarbeiten von Daten sowie ein Nutzercomputersystem, ein Dienstcomputersystem und ein Key-Providercomputersystem.

Die zunehmende Vernetzung von Computersystemen, insbesondere über das Internet, und die Entwicklung schneller Breitbandverbindungen, führt dazu, dass es heutzutage immer weniger Unterschied macht, ob Daten lokal auf einem Computersystem gespeichert sind und lokal verarbeitet werden oder auf einem entfernten Computersystem, wie einem Server, gespeichert und von einem entfernten Computersystem verarbeitet werden. Dies führt dazu, dass beispielsweise das Cloud-Computing immer mehr an Bedeutung gewinnt.

Beim Cloud-Computing werden IT-Infrastrukturen, wie etwa Rechenkapazität, Datenspeicher, Netzkapazitäten oder auch Software, über ein Netz zur Verfügung gestellt, ohne dass diese IT-Infrastrukturen auf einem lokalen Rechner installiert sein müssen, um sie zu nutzen. Dies erlaubt es IT-Infrastrukturen bedarfsgerecht, beispielsweise über das Internet oder ein Intranet, bereitzustellen, wodurch mehr Flexibilität, eine nahezu unbegrenzte Skalierbarkeit und niedrigere Kosten erreicht werden können.

Cloud-Szenarien bieten sich insbesondere zum Speichern und Auswerten großer Datenvolumen an, die heutzutage häufig unter dem Schlagwort "Big-Data" behandelt werden. Hierbei handelt es sich insbesondere um Datenvolumen, welche zu groß, zu komplex, zu schnelllebig und/oder zu schwach strukturiert sind, um sie mit herkömmlichen Methoden elektronischer Datenverarbeitung auf einem einzelnen lokalen Computer zu speichern oder auszuwerten.

Beim Datenhosting in einem Cloud-Szenario, d.h. beim Speichern von Daten auf einem über die Cloud bereitgestellten Speichersystem, ergibt sich für den Dateneigentümer allerdings das Problem, dass ein Schutz seiner Daten vor unerlaubten Zugriffen, etwa durch den Hosting-Anbieter, gegenwärtig nur durch eine vollständige Verschlüsselung der gehosteten Daten gewährleistet werden kann. Dies bedeutet aber einen erhöhten Aufwand beim Umgang mit den Daten und macht eine verteilte Verarbeitung der gehosteten Daten, die Sinn und Zweck der Cloud-Lösung ist, impraktikabel.

Möchte ein Dateneigentümer beispielsweise im Rahmen von Cloud-Computing unter Ausnutzung größerer durch die Cloud bereitgestellter Rechenkapazitäten Daten durch einen externen Dienstleister verarbeiten oder auswerten lassen, benötigt der Dienstleister einen direkten Zugriff auf die Daten in der Cloud. Gibt der Dateneigentümer seine Daten jedoch nur verschlüsselt in die Cloud, kann der Dienstleister keine Dienstleistungen erbringen. Es müssen also entweder Einschränkungen hinsichtlich der Datensicherheit hingenommen werden (Daten sind unverschlüsselt, so dass der Anbieter von Dienstleistungen und/oder der Hosting-Anbieter unkontrolliert auf die Daten zugreifen können) oder aber Einschränkungen hinsichtlich der Funktionalität (Daten sind verschlüsselt, so dass der Anbieter von Dienstleistungen diese nicht oder nur eingeschränkt erbringen kann).

Im Fall von kleinen Datenvolumen mag es noch möglich sein, verschlüsselt in der Cloud gespeicherte Daten zur Verarbeitung oder Auswertung zunächst aus der Cloud herunterzuladen, zu entschlüsseln und anschließend einem Anbieter von entsprechenden Verarbeitungs- oder Auswertungsdienstleistungen zur Verfügung zu stellen. Mit wachsendem Datenvolumen wird dies jedoch zunehmend impraktikabel.

An seine Grenzen kommt eine solche behelfsmäßige Lösung spätestens im Falle von Big Data. Aufgrund der Größe und/oder der Komplexität kann es erforderlich sein, zuerst einmal zu analysieren, welche Daten für eine aufwendige und vollständige Verarbeitung überhaupt von Interesse sind. Ferner können die zu berücksichtigenden Datenvolumen zu groß, zu komplex, zu schnelllebig und/oder zu schwach strukturiert sind, um sie auf einem lokalen Computer auszuwerten.

Dies hat zur Folge, dass Data-Analytics über Big Data heute üblicherweise mit unverschlüsselten Daten ausgeführt werden. Wenn der Dateneigentümer dabei jedoch, wie beispielsweise in einem Cloud-Szenario, nicht selbst der Auswerter der Daten und auch nicht der Datenhoster ist, verliert der Dateneigentümer die Verfügungshoheit über die Sicherheit seiner Daten.

Die US 2010/114964 A1 beschreibt ein Verfahren zum Durchführen von Datenanalysen für ausgelagerte Daten. Das Verfahren umfasst ein Erzeugen eines binären Baums, der Daten eines Dateneigentümers darstellt, durch den Dateneigentümer, wobei jedem Knoten des binären Baums eine Identität zugeordnet ist, die ein Datenelement oder ein Intervall von Datenelementen darstellt, ein Berechnen eines Identitätstokens durch den Dateneigentümer und ein Verschlüsseln des Identitätstokens für jede der Identitäten im Binärbaum, ein Erzeugen eines Bereichsabfragetokens unter Verwendung einer von einem Datenanalysten ausgewählten Identität und eines von dem Dateneigentümer eingegebenen geheimen Schlüssels, ein Berechnen eines Entschlüsselungsschlüssels für die ausgewählte Identität und ein Analysieren der Daten durch den Datenanalysten durch Vergleichen des berechneten Entschlüsselungsschlüssels für die ausgewählte Identität mit jeder der verschlüsselten Identitäten.

Die US 2010/246827 A1 beschreibt Architekturen, welche einen hierarchischen Satz von Entschlüsselungsschlüsseln aufbauen können, um eine benutzergesteuerte, verschlüsselte Datenspeicherung mit vielfältigen Zugangsmöglichkeiten und ein Hosting der verschlüsselten Daten zu erleichtern. Es wird ein Root-Schlüssel verwendet, um den hierarchischen Satz von Entschlüsselungsschlüsseln und einen entsprechenden hierarchischen Satz von Verschlüsselungsschlüsseln abzuleiten. Jeder abgeleitete Schlüssel entspricht einer mit verschlüsselten Daten des Nutzers verbundenen Hierarchie und die Entschlüsselungsfähigkeiten der Entschlüsselungsschlüssel werden basierend auf einem Ort oder einer Zuordnung der Entschlüsselungsschlüssel innerhalb der Hierarchie konfiguriert. Die kryptografischen Verfahren können mit einer Richtliniensprache verbunden werden, die Schlüsselsätze zum Erfassen von Präferenzen zu Freigabemustern angibt. Diese Richtlinien zum Freigeben können selbst Schlüssel für einen Zugriff erfordern. Die Richtlinien können zusätzliche Schlüssel für andere Aspekte der Richtlinien und/oder für Basiszugriffe bereitstellen.

Die US 2017/093810 A1 beschreibt ein System zur Übertragung von Daten, die sich auf ein Objekt beziehen. Das System umfasst eine dem Objekt zugeordnete lokale Recheneinheit, wobei die lokale Recheneinheit einen Datenspeicher, eine Auswerteeinheit und eine Anwendung umfasst. Die Anwendung veranlasst die Auswerteeinheit das Objekt betreffende Daten in dem Datenspeicher zu speichern. Ein Software-Agent sammelt die das Objekt betreffenden und in dem Datenspeicher gespeicherten Daten und übermittelt diese über eine Datenverbindung an eine externe Recheneinheit. Der Software-Agent verfügt über ein Klassifizierungsmodul, welches die das Objekt betreffenden Daten in sensible Daten und nicht sensible Daten klassifiziert. Die sensiblen Daten werden unter Verwendung eines Verschlüsselungsalgorithmus an die externe Recheneinheit übertragen, die nicht sensiblen Daten werden unverschlüsselt an die externe Recheneinheit übertragen.

Der Erfindung liegt daher die Aufgabe zugrunde, Verfahren und Vorrichtungen bereitzustellen, die den Anforderungen an Datensicherheit und Datenverarbeitung im Rahmen von Cloud-Computing besser gerecht werden. Die Erfindung ist in den unabhängigen Ansprüchen 1, 10, 11 und 12 definiert. Ausführungsformen sind in den abhängigen Ansprüchen definiert.

Ausführungsformen können den Vorteil haben, dass es einerseits möglich ist, Daten ohne Datenschutzbedenken von einem beliebigen Cloud-Anbieter unbekannter Integrität hosten zu lassen und diese Daten andererseits durch einen als vertrauenswürdig angesehenen Dienstleister verarbeiten zu lassen. Dabei erhält der Dienstleister nur auf diejenigen Daten einen Zugriff, d.h. einen Schlüssel zum Entschlüsseln, eingeräumt, die er zur Erfüllung einer vom Dateneigentümer gewünschten Aufgabe benötigt. Aufgrund der klassenbasierten Verschlüsslung der Metadaten kann durch Bereitstellen eines dem klassenabhängigen ersten öffentlichen kryptographischen Schlüssel zugeordneten klassenabhängigen ersten privaten kryptographischen Schlüssels der Zugriff auf die Metadaten der Klasse beschränkt werden, welcher der bereitgestellte klassenabhängige erste private kryptographische Schlüssel zugeordnet ist.

Eine Datenmenge beschreibt hier eine nicht leere endliche Menge von Datenelementen bzw. Datenobjekten. Dabei umfasst eine Datenmenge mindestens ein Datenelement. Datenelemente können beispielsweise Buchstaben, Zahlen, Sonderzeichen oder Ähnliches umfassen, sowie Kombinationen aus diesem, wie etwa Formeln, Wörter, Zahlenwerte, Messwerte, Zeichenketten oder Ähnliches. Eine Datenmenge kann beispielweise Datensätze, Datenfelder oder Datenitems umfassen. Eine Datenmenge kann beispielsweise einen Satz von Messdaten oder Wörtern umfassen. Beispielsweise umfasst eine Datenmenge ein oder mehrere Sätze, Absätze, Paragraphen oder Kapitel. Ferner kann eine Datenmenge einen Text, wie etwa einen Aufsatz, einen wissenschaftlichen Fachartikel, ein Dokument, eine Studie, eine Zeitschrift, ein Buch oder Ähnliches umfassen. Ebenso kann eine Datenmenge auch Bild- und/oder Tondaten umfassen, wie etwa Foto-, Video-, oder Tonaufnahmen.

Eine Klasse fasst Datenobjekte zusammen, welche einer oder mehreren Bedingungen genügen. Diese Bedingungen umfassen ein Übereinstimmen in einem oder mehreren Merkmalen bzw. Klassifikationsparametern. Jeder Klasse ist ein Klassifikationsparameterwert und/oder eine Kombination von Klassifikationsparameterwerten zugeordnet. Eine Klasse ist somit definiert durch die sie kennzeichnenden Klassifikationsparameterwerte. In einer Klasse werden somit Datenobjekte zusammengefasst, welche in ein oder mehreren Merkmalen gleich oder ähnlich sind. Mit anderen Worten weisen Datenobjekte derselben Klasse übereinstimmende Klassifikationsparameterwerte auf. Die Gesamtheit aller Klassen bildet eine Klassifikation bzw. ein Klassifikationsschema. Mittels einer Klassifizierung werden die Datenobjekte bzw. Datenmengen den Klassen des Klassifikationsschemas zugeordnet. Ein Klassifikationsschema kann hierarchisch strukturiert sein in Ebenen mit unterschiedlicher Differenzierung im Hinblick auf die Klassifikationsparameter. Im Falle einer hierarchischen Klassenstruktur bilden die Klassen, welchen unterschiedliche Werte desselben Klassifikationsparameters zugeordnet sind eine Hierarchieebene. Somit können auch die Klassen entsprechend hierarchisch strukturiert sein und Oberklassen sowie Unterklassen umfassen. Eine Klasse kann sowohl die Rolle einer Unterklasse gegenüber einer Oberklasse einer höheren Hierarchieebene als auch die Rolle einer Oberklasse gegenüber Klassen niedrigerer Hierarchieebene eines Klassifikationsschemas innehaben. Bei einem Klassifikationsschema kann es sich beispielsweise um eine Monohierarchie handeln, in welcher jede Klasse nur eine Oberklasse besitzt, so dass die gesamte Klassifikation eine Baumstruktur aufweist.

Das Verschlüsselungsverfahren erfordert es nicht, dass sich die Daten zum Verschlüsseln in der Kontrolle des Dateneigentümers befinden. Beispielsweise werden die Daten am Ort der Erzeugung bzw. durch das erzeugende Computersystem verschlüsselt. Beispielsweise werden die Daten bei ihrer Erzeugung mit Metadaten, wie etwa einem Tag, versehen. Metadaten können eine Klassen-ID umfassen, welche beispielsweise Schlagwörter, Zahlen, Sonderzeichen, Zeichenfolgen, RegExp-Muster oder dergleichen umfasst. Bei einem RegExp-Muster handelt es sich um einen regulären Ausdruck (engl. "regular expression", kurz "RegExp"), welcher in der theoretischen Informatik eine Zeichenkette bezeichnet, die der Beschreibung von Mengen von Zeichenketten mit Hilfe bestimmter syntaktischer Regeln dient. Ferner können die Metadaten beispielsweise Zeitangaben und/oder Eigentümer-IDs umfassen. Entsprechende Zeitangaben können beispielsweise den Zeitpunkt und/oder Zeitraum der Datenerzeugung und/oder einen Gültigkeitszeitraum bzw. ein eine Ablaufzeit der Gültigkeit identifizieren. Eigentümer-IDs können beispielsweise Kennungen umfassen, welche den oder die Eigentümer einer Datenmenge identifizieren. Aus den entsprechenden Metadaten können klassenabhängige öffentliche kryptographische Schlüssel für eine klassenbasierte Verschlüsselung der entsprechenden Datenmengen, denen die Metadaten zugeordnet sind, berechnet werden. Mit diesen klassenabhängigen öffentlichen kryptographischen Schlüsseln kann die Verschlüsselung automatisch ausgeführt werden.

Wird ein Dienstanbieter mit der Auswertung von verschlüsselten Daten beauftragt, kann er die zum Entschlüsseln notwendigen klassenabhängigen privaten kryptographischen Schlüssel für die ihn interessierenden Klassen beantragen. Der Dateneigentümer oder eine von diesem beauftragte vertrauenswürdige dritte Instanz, wie etwa ein Trust Center, fungiert als eine Schlüssel-Verwaltungs-Zentrale (engl. "key distribution center"), welche ein der Verschlüsselung zugrundliegendes klassenunabhängiges asymmetrisches Hauptschlüsselpaar verwaltet und auf Anforderung von berechtigten Computersystemen zum Entschlüsseln notwendige klassenabhängige private kryptographische Schlüssel ausgibt.

Die Verschlüsselung der Daten kann beispielsweise am Ort der Entstehung, d.h. der Datenquelle, erfolgen. Hierbei können die Anforderungen an eine Trusted Hardoder Software des Computersystems, in dem die Daten entstehen, wie etwa einen Sensor, weitgehend relaxiert werden. So kann es sich beispielsweise sogar um nicht vertrauenswürdige Hard- und Software handeln. Hierbei wird keine Schlüsselverwaltung mit Zertifikaten, wie etwa X.509-Zertifikaten, zum Sicherstellen einer PKI für die klassenabhängigen kryptographischen Schlüssel benötigt. Die Computersysteme, auf denen die Daten entstehen, verschlüsseln die Daten beispielsweise mit einer ID der Daten bzw. einer Klassen-ID einer Klasse, der die Daten zugeordnet sind. Ferner wird keine Schlüsselverwaltung für die Datenquellen, d.h. elektronischen Geräte, Sensoren, Software, Apps, usw., benötigt. Nach Ausführungsformen wird lediglich eine Schlüssel-Verwaltungs-Zentrale zum Entschlüsseln und Auswerter der Daten benötigt.

Eine ID ist ein Identifikator, auch als Kennung bezeichnet, ist ein mit einer bestimmten Identität verknüpftes Merkmal zur eindeutigen Identifizierung eines Objekts, insbesondere eines Datenobjekts, dem der Identifikator zugeordnet ist. Ein Identifikator kann beispielsweise Zahlen, Buchstaben, Sonderzeichen sowie Kombinationen aus diesen umfassen. Solche Kombinationen können nach Ausführungsformen auch beschreibende Angaben umfassen. Eine Klassen-ID identifiziert beispielsweise eine Klasse eines Klassifikationsschemas eindeutig. Nach Ausführungsformen umfasst die Klassen-ID beispielsweise ein oder mehrere Klassifikationsparameterwerte, welche der entsprechenden Klasse zugeordnet sind.

Ein Anwendungsbeispiel für Ausführungsformen stellt ein Sensor dar, welcher Daten erfasst und diesen Metadaten zuordnet, welche einen Wert für den Klassifikationsparameter "Temperatur" umfassen. Die Daten werden mithilfe des klassenabhängigen öffentlichen kryptographischen Schlüssels durch einen Prozessor des Sensors, welcher als Nutzercomputersystem dient, verschlüsselt. Die Temperatur wird dabei in unterschiedliche Temperaturintervalle, wie etwa 30°C bis 35°C, 35°C bis 40°C und 40°C bis 45°C, eingeteilt. Jedes Temperaturintervall entspricht im Beispiel einer Klasse. Die klassenabhängigen öffentlichen kryptographischen Schlüssel der einzelnen Klassen werden jeweils unter Verwendung des entsprechenden der Klasse zugeordneten Temperaturintervalls berechnet. Die resultierenden verschlüsselten Daten bzw. das entsprechenden Chiffrat werden beispielsweise zur Speicherung in eine 3rd Party Cloud hochbeladen, d.h. an Computersysteme von Dritten gesendet, welche Teil einer Cloud-Umgebung sind. Neben einer Datenspeicherung erfolgt in der Cloud beispielsweise auch eine Datenauswertung.

Zur Datenauswertung wird beispielsweise ein entsprechender Dienstanbieter aus der Cloud herangezogen. Damit dieser die Daten auswerten kann, werden ihm die klassenabhängigen privaten kryptographischen Schlüssel zum Entschlüsseln der auszuwertenden Daten zur Verfügung gestellt. Mit den klassenabhängigen privaten kryptographischen Schlüsseln kann der Dienstanbieter den in der Cloud gespeicherten Datenbestand zumindest teilweise entschlüsseln und zu Auswertungszwecken durchsuchen. Hierbei dienen die klassenabhängigen privaten kryptographischen Schlüssel beispielsweise auch als Identifikatoren der auszuwertenden Daten. Den in der Cloud gespeicherten Chiffraten ist beispielsweise nicht anzusehen, welche Daten diese umfassen. In diesem Fall können die auszuwertenden Daten beispielsweise dadurch identifiziert werden, dass sie sich mit den zur Verfügung gestellten klassenabhängigen privaten kryptographischen Schlüsseln entschlüsseln lassen.

Beispielsweise ist das Nutzercomputersystem ein dem Eigentümer der Daten zugeordnetes Computersystem bzw. ein Computersystem, über welches der Dateneigentümer direkte Verfügungsgewalt besitzt. Vor einem Speichern der Datenmenge verschlüsselt der Eigentümer die Daten, d.h. die Datenmenge und/oder Metadaten, mit dem klassenabhängigen ersten öffentlichen kryptographischen Schlüssel. Die Speicherung der Daten kann dann lokal oder auf einem entfernten Speichersystem, wie beispielsweise einem in der Cloud bereitgestellten Speichersystem, erfolgen. Nach Ausführungsformen werden die Daten direkt bei ihrer Entstehung klassifiziert und abhängig von der resultierenden Klassenzuordnung mit einem entsprechenden klassenabhängigen öffentlichen kryptographischen Schlüssel verschlüsselt. Hierbei müssen die Daten nicht auf einem Computersystem des Dateneigentümers selbst entstehen bzw. auf einem Computersystem, über das der Dateneigentümer direkte Verfügungsgewalt besitzt. Beispielsweise handelt es sich bei den Daten um Sensordaten, welche von einem Sensor bzw. einem Sensorgerät erfasst werden, d.h. auf dem Sensor entstehen. Bei dem Sensor kann es sich beispielweise um eine Vorrichtung des "Internets der Dinge" handeln. Im Zuge des sogenannten Internet der Dinge (engl. "internet of things", abgekürzt "IoT") werden Gegenstände des Alltags zunehmend durch "intelligente Gegenstände" (engl. "smart devices") ersetzt, welche informationstechnisch aufgerüstet und dazu konfiguriert sind, selbst Informationen zu verarbeiten. Diese intelligenten Gegenstände sind mit datenverarbeitender Hardware ausgerüstet, wie etwa einem eingebauten Mikrocontroller, Kommunikationsschnittstellen und/oder Sensoren, sodass sie Daten erfassen, speichern und/oder untereinander austauschen können.

Umfassen die zu verschlüsselnden Daten eine Mehrzahl von Datenmengen bzw. Datenuntermengen, welche unterschiedlichen Klassen zugeordnet sind, werden für die Verschlüsselung eine Mehrzahl von klassenabhängigen asymmetrischen Schlüsselpaaren verwendet. Nach Ausführungsformen steht für jede der Klassen eines verwendeten Klassifikationsschemas ein eigener klassenabhängiger öffentlicher kryptographischer Schlüssel zur Verfügung bzw. wird im Bedarfsfall berechnet.

Die klassenabhängigen asymmetrischen Schlüsselpaare können beispielsweise auf einem asymmetrischen Hauptschlüsselpaar beruhen, welches klassenunabhängig ist und einen öffentlichen sowie einen privaten kryptographischen Hauptschlüssel umfasst. Klassenindividuelle bzw. klassenabhängige öffentliche und private Schlüssel werden beispielsweise unter Verwendung des öffentlichen bzw. privaten kryptographischen Hauptschlüssels und einer individuellen Klassen-ID der Klasse berechnet, welcher der entsprechende klassenabhängige Schlüssel zugeordnet sein soll.

Nach Ausführungsformen erfolgen die Schlüsselerzeugung des asymmetrischen Hauptschlüsselpaars und die Speicherung des privaten kryptographischen Hauptschlüssels in einer technisch und/oder kryptographisch geschützten Umgebung. Nach Ausführungsformen kann die Schlüsselerzeugung durch ein Trust Center erfolgen.

Ein Trust Center ist eine vertrauenswürdige dritte Instanz (engl. "trusted third party"), welche in elektronischen Kommunikationsprozessen sicherheitsrelevante Informationen bereitstellt, in deren Authentizität und/oder deren Sicherheit aufgrund der Integrität des Trust Centers vertraut wird. Um diese Integrität sicherzustellen, implementiert das Trust Center auf einem angemessenen Sicherheitsniveau organisatorische und technische Sicherheitsmaßnahmen. Generelle Anforderungen an ein Trust Center mit Sicherheitslevel "hoch" lassen sich im Hinblick auf Zertifikate beispielsweise der technischen Richtlinie des Bundesamtes für Sicherheit in der Informationstechnik TR-03145 "Secure Certification Authority operation" Version 1.0, 2014, entnehmen. Analoge Anforderungen an ein Trust Center lassen sich im Hinblick auf die Erzeugung und Verwaltung kryptographischer Hauptschlüssel anwenden. Das Trust Center fungiert somit als ein sogenannter "Vertrauensanker".

Nach Ausführungsformen kann die Erzeugung der klassenabhängigen öffentlichen kryptographischen Schlüssel durch den Dateneigentümer bzw. durch ein Computersystem erfolgen, welches sich in der Verfügungsgewalt des Dateneigentümers befindet. Ferner kann auch die Erzeugung und/oder Verwaltung des asymmetrischen Hauptschlüsselpaars durch den Dateneigentümer erfolgen. Hierfür kann das Computersystem des Dateneigentümers beispielsweise mit einem Sicherheitsmodul ausgestattet sein. Insbesondere kann der private kryptographische Hauptschlüssel in einem geschützten Speicherbereich eines Speichers des entsprechenden Computersystems gespeichert sein, auf welchen ein Zugriff nur über einen Prozessor des Computersystems möglich ist.

Ein "Sicherheitsmodul" stellt kryptographische Kernroutinen in Form von kryptographischen Programminstruktionen mit kryptographischen Algorithmen für Signaturerstellung und -prüfung, Schlüsselgenerierung, Schlüsselaushandlung, Ver- und Entschlüsselung von Daten sowie Zufallszahlengenerierung bereit und dient als sicherer Speicher für kryptographisches Schlüsselmaterial.

Beispielsweise sind zumindest Teile des Sicherheitsmoduls signiert, wie z.B. Programmkomponenten und/oder Hardwarekomponenten, die eine digitale Signatur tragen können. Insbesondere können das Betriebssystem, ein Bootloader, wie er beispielsweise von dem UEFI (engl. "Unified Extensible Firmware Interface", d.h. "Vereinheitlichte erweiterbare Firmware-Schnittstelle") bereitgestellt werden kann, eine Konfigurationsdatei und/oder ein Speicher des Sicherheitsmoduls digital signiert sein. Vor einer Nutzung des Sicherheitsmoduls wird geprüft, ob die Signatur bzw. die Signaturen, valide sind. Wenn eine der Signaturen nicht valide ist, wird die Nutzung des Sicherheitsmoduls und/oder des durch das Sicherheitsmodul gesicherten elektronischen Systems gesperrt.

Des Weiteren kann ein Sicherheitsmodul Mittel zur kryptographischen Datensicherung umfassen, insbesondere in dem geschützten Speicherbereich, wie beispielsweise einen Zufallszahlengenerator, einen Generator für kryptographische Schlüssel, einen Hashgenerator, ein Ver-/Entschlüsselungsmodul, ein Signaturmodul, Zertifikate und/oder einen oder mehrere nicht migrierbare kryptographische Schlüssel.

Nach Ausführungsbeispielen ist das Sicherheitsmodul als ein sogenanntes Tamper Proof Module oder Trusted Platform Module (TPM) ausgebildet, welche auch als Tamper Resistant Module (TRM) bezeichnet werden. Beispielsweise sind zumindest Teile des Computersystems signiert, wie z.B. Programmkomponenten und/oder Hardwarekomponenten, die eine digitale Signatur tragen können. Insbesondere können das Betriebssystem, ein Bootloader, wie er beispielsweise von dem UEFI (engl. "Unified Extensible Firmware Interface", d.h. "Vereinheitlichte erweiterbare Firmware-Schnittstelle") bereitgestellt werden kann, eine Konfigurationsdatei und/oder ein Massenspeichermedium des Computersystems digital signiert sein. Vor einer Nutzung des Computersystems prüft das TRM dann, ob die Signatur bzw. die Signaturen, valide sind. Wenn eine der Signaturen nicht valide ist, sperrt das TRM die Nutzung des Computersystems. Ein TPM umfasst einen Mikrokontroller nach der TCG-Spezifikation wie in ISO/IEC 11889, der ein Computersystem oder ähnliche Geräte um grundlegende Sicherheitsfunktionen erweitert.

Bei dem Sicherheitsmodul kann es sich beispielsweise um einen geschützten Mikrocontroller handeln, d.h. einen Mikrocontroller mit physikalisch beschränkten Zugriffsmöglichkeiten. Zudem kann das Sicherheitsmodul zusätzliche Maßnahmen gegen Missbrauch aufweisen, insbesondere gegen unberechtigte Zugriffe auf Daten im Speicher des Sicherheitsmoduls. Beispielsweise umfasst ein Sicherheitsmodul Sensoren zur Überwachung des Zustands des Sicherheitsmoduls sowie von dessen Umgebung, um Abweichungen vom Normalbetrieb zu erkennen, welche auf Manipulationsversuche hinweisen können. Entsprechende Sensortypen umfassen beispielweise einen Taktfrequenzsensor, einen Temperatursensor, einen Spannungssensor und/oder einen Lichtsensor. Taktfrequenzsensoren, Temperatursensoren und Spannungssensoren erfassen beispielweise Abweichungen der Taktfrequenz, Temperatur und/oder Spannung nach oben oder unten von einem vordefinierten Normalbereich. Insbesondere kann ein Sicherheitsmodul nichtflüchtige Speicher mit einem geschützten Speicherbereich umfassen.

Nach einer Ausführungsform der Erfindung beinhalten die Mittel zum Schutz des Sicherheitsmoduls gegen unbefugte Manipulationen mechanische Mittel, die z.B. das Öffnen des Sicherheitsmoduls oder seiner Teile verhindern sollen, oder die bei dem Versuch eines Eingriffs in das Sicherheitsmodul dieses unbrauchbar machen, beispielsweise indem ein Datenverlust eintritt. Beispielsweise können hierzu sicherheitskritische Teile des Sicherheitsmoduls in Epoxidharz eingegossen sein, wobei ein Versuch, eine betreffende Komponente aus dem Epoxidharz zu entfernen, zu einer unvermeidlichen Zerstörung dieser Komponente führt.

Durch die Mittel zum Schutz gegen unbefugte Manipulationen wird durch technische Maßnahmen die Vertrauenswürdigkeit des Sicherheitsmoduls, das heißt seine Funktion als "Vertrauensanker", gewährleistet. Beispielsweise wird das Sicherheitsmodul von einer vertrauenswürdigen Institution, wie z.B. durch ein Trust-Center, konfiguriert und mit dem benötigten kryptografischen Schlüsselmaterial versehen. Durch die Mittel zum Schutz gegen unbefugte Manipulationen kann sichergestellt werden, dass sicherheitsrelevante Funktionalitäten des Sicherheitsmoduls nicht modifiziert werden.

Nach Ausführungsformen wird der öffentliche kryptographische Hauptschlüssel von einem als Schlüsselerzeuger konfigurierten Key-Providercomputersystem, z.B. einem unabhängigen Key-Providercomputersystem wie etwa einem Trust Center oder einem Computersystem des Dateneigentümers, an das die Daten verschlüsselnde Computersystem gesendet. Somit kann das die Daten verschlüsselnde Computersystem unter Verwendung des öffentlichen kryptographischen Hauptschlüssels der Klassen-IDs gemäß dem Klassifikationsschema je nach Bedarf für jede der Klassen einen klassenabhängigen öffentlichen kryptographischen Schlüssel berechnen.

Nach weiteren Ausführungsformen werden dem die Daten verschlüsselnden Nutzercomputersystem ein oder mehrere klassenabhängigen öffentlichen kryptographischen Schlüssel für eine oder mehrere Klassen des Klassifikationsschemas zur Verfügung gestellt. Beispielsweise erhält das die Daten verschlüsselnde Nutzercomputersystem die klassenabhängigen öffentlichen kryptographischen Schlüssel von dem Erzeuger des asymmetrischen Hauptschlüsselpaars, wie etwa einem Trust Center oder einem dem Dateneigentümer zugeordneten Computersystem. Nach Ausführungsformen erhält beispielsweise ein dem Dateneigentümer zugeordnetes Computersystem die klassenabhängigen öffentlichen kryptographischen Schlüssel für das Klassifikationsschema und stellt diese dem die Daten verschlüsselnden Nutzercomputersystem zur Verfügung. Dabei kann das dem Dateneigentümer zugeordnete Computersystem zudem das Klassifikationsschema zur Verfügung stellen. Das klassenbasierte Verschlüsselungsverfahren kann beispielsweise auf bilinearen Paarungen auf elliptischen Kurven, wie etwa der Weil- oder Tate-Paarung, beruhen. Ein klassenbasierte Verschlüsselungsverfahren kann beispielsweise auf Basis von Verschlüsselungsalgorithmen wie etwa dem Boneh-Franklin-Algorithmus, dem Sakai-Kasahara-Algorithmus, oder dem Boneh-Boyen-Algorithmus implementiert werden.

"Cloud Computing" beinhaltet nach hiesiger Verwendung des Begriffs insbesondere das Ausführen von Programmen, die nicht auf einem lokalen Rechner installiert sind, sondern auf einem anderen entfernten Rechner, welcher aus der Ferne beispielsweise über das Internet aufgerufen wird. Zum Ausführen von Programmen kann auf eine Mehrzahl von entfernten Rechner zurückgegriffen werden, welche als Cloud bzw. Rechnerwolke bezeichnet werden. Dabei bleibt für den Anwender des Cloud Computings üblicherweise unbekannt, auf welchem Rechner an welchem Ort die Programme tatsächlich ausgeführt werden.

Gemäß einer Definition des National Institute of Standards and Technology (NIST) ("The NIST Definition of Cloud Computing", Version 15, 10-07-09) umfasst Cloud Computing drei verschiedene Dienstmodelle: Infrastructure as a Service (laaS), Platform as a Service (PaaS) und Software as a Service (SaaS). Im Falle von laaS bietet eine Rechnerwolke Nutzungszugang von virtualisierten Computerhardware-Ressourcen wie Rechnern, Netzen und Speicher. PaaS umfasst Nutzungszugang von Programmierungs- oder Laufzeitumgebungen mit flexiblen, dynamisch anpassbaren Rechen- und Datenkapazitäten. Im Fall von SaaS offeriert die Rechnerwolke Nutzungszugang von Software-Sammlungen und Anwendungsprogrammen. Anbieter von SaaS bieten eine Auswahl von Software, welche spezifisch die von ihnen bereitgestellte Infrastruktur abgestimmt ist und auf dieser läuft. SaaS wird auch als "Software on demand", d.h. Software bei Bedarf, bezeichnet.

Unter einer "Schnittstelle" wird hier eine Schnittstelle verstanden, über die Daten empfangen und gesendet werden können, wobei die Kommunikationsschnittstelle kontaktbehaftet oder kontaktlos konfiguriert sein kann. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist.

Eine Kommunikation kann beispielsweise über ein Netzwerk erfolgen. Unter einem "Netzwerk" wird hier jedes Übertragungsmedium mit einer Anbindung zur Kommunikation verstanden, insbesondere eine lokale Verbindung oder ein lokales Netzwerk, insbesondere ein Local Area Network (LAN), ein privates Netzwerk, insbesondere ein Intranet, und ein virtuelles privates Netzwerk (Virtual Private Network - VPN). Beispielsweise kann ein Computersystem eine Standardfunkschnittstelle zur Anbindung an ein WLAN aufweisen. Ferner kann es sich um ein öffentliches Netzwerk, wie beispielsweise das Internet handeln. Je nach Ausführungsform kann diese Verbindung auch über ein Mobilfunknetz hergestellt werden.

Unter einem "Speicher" werden hier sowohl flüchtige als auch nichtflüchtige elektronische Speicher bzw. digitale Speichermedien verstanden.

Unter einem "nichtflüchtigen Speicher" wird hier ein elektronischer Speicher zur dauerhaften Speicherung von Daten verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "flüchtigen elektronischen Speicher" wird hier ein Speicher zur vorübergehenden Speicherung von Daten, welcher dadurch gekennzeichnet ist, dass alle Daten nach dem Abschalten der Energieversorgung verlorengehen. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "geschützten Speicherbereich" wird hier ein Bereich eines elektronischen Speichers verstanden, auf den ein Zugriff, das heißt ein Lesezugriff oder ein Schreibzugriff, nur über einen Prozessor des Sicherheitsmoduls möglich ist. Nach Ausführungsformen ist der Zugriff von dem mit dem Speicher gekoppelten Prozessor nur dann möglich, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln.

Unter einem "Computer" bzw. "Computersystem" wird hier ein elektronisches Gerät verstanden, welches dazu konfiguriert ist mittels programmierbarer Rechenvorschriften unter Verwendung elektronischer Schaltkreise Daten verarbeitet. Ein Computersystem umfasst insbesondere einen "Prozessor". Unter einem "Nutzercomputersystem" wird hier ein Computersystem verstanden, welches dazu konfiguriert ist, Daten unter Verwendung einer klassenbasierten Verschlüsselung zu verschlüsseln. Unter einem "Dienstcomputersystem" wird hier ein Computersystem verstanden, welches dazu konfiguriert ist, Daten zu entschlüsseln und zu verarbeiten, welche unter Verwendung einer klassenbasierten Verschlüsselung verschlüsselt sind. Unter einem "Key-Providercomputersystem" wird hier ein Computersystem verstanden, welches dazu konfiguriert ist, kryptographische Schlüssel zu erzeugen zu verwalten und zum Verschlüsseln und/oder Entschlüsseln von Daten bereitzustellen, insbesondere klassenabhängige kryptographische Schlüssel zur Verwendung bei klassenbasierten Verschlüsselungen.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem öffentlichen Schlüssel, welcher zur Ver- und/oder Entschlüsselung von Daten verwendet wird und an Dritte, beispielsweise an einen Dienstanbieter, weitergegeben werden darf, sowie aus einem privaten Schlüssel, welcher zur Ver- und/oder Entschlüsselung von Daten verwendet wird und im Regelfall geheim gehalten werden muss. Der öffentliche Schlüssel ermöglicht es jedermann, Daten für den Inhaber des privaten Schlüssels zu verschlüsseln, digitale Signaturen von dessen Dokumenten zu prüfen oder ihn zu authentifizieren. Ein privater Schlüssel ermöglicht es seinem Inhaber, mit dem öffentlichen Schlüssel verschlüsselte Daten zu entschlüsseln oder digitale Signaturen für elektronische Dokumente zu erstellen. Eine mit einem privaten Schlüssel erstellte Signatur kann mit dem zugehörigen öffentlichen Schlüssel verifiziert werden.

Die Erstellung einer digitalen Signatur, im Folgenden auch lediglich als "Signatur" bezeichnet, ist ein kryptographisches Verfahren, bei dem zu beliebigen Daten, zum Beispiel einem elektronischen Dokument, ein weiterer Datenwert, welcher als "Signatur" bezeichnet wird, berechnet wird. Die Signatur kann zum Beispiel ein verschlüsselter Hashwert des elektronischen Dokumentes sein, insbesondere ein mit einem privaten Schlüssel eines einem Zertifikat zugeordneten kryptographischen Schlüsselpaares verschlüsselter Hashwert. Die Besonderheit einer solchen Signatur besteht darin, dass deren Urheberschaft und Zugehörigkeit zu einer bestimmten Person oder Instanz durch jeden Dritten geprüft werden kann.

Unter einem "Zertifikat" wird hier ein digitales Zertifikat verstanden, welches auch als Public-Key-Zertifikat bezeichnet wird. Durch solche Zertifikate basierend auf asymmetrischen Schlüsselpaaren wird eine sogenannte Public Key Infrastructure (PKI) realisiert. Bei einem solchen Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Ein Zertifikat kann beispielsweise einen öffentlichen Schlüssel beinhalten und signiert sein. Alternativ sind auch Zertifikate basierend auf zero-knowledge Kryptosystemen möglich. Beispielsweise kann das Zertifikat dem Standard X.509 Version 3 oder einem anderen Standard entsprechen. Beispielsweise handelt es sich bei dem Zertifikat um ein CV-Zertifikat oder auch Card Verifiable Certificate (CVC). Eine Implementierung von solchen CVCs ist beispielsweise in der ISO/IEC 7816-8 spezifiziert.

Die PKI stellt ein System zum Ausstellen, Verteilen und Prüfen digitaler Zertifikate. Ein digitales Zertifikat dient in einem asymmetrischen Kryptosystem dazu, die Authentizität eines öffentlichen Schlüssels und seinen zulässigen Anwendungs- und Geltungsbereich zu bestätigen. Das digitale Zertifikat ist selbst durch eine digitale Signatur geschützt, deren Echtheit mit dem öffentlichen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des durch dieses Zertifikat zertifizierten Schlüssels, müssen sich die Teilnehmer der PKI ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Digitale Zertifikate sind bei der Absicherung elektronischer Kommunikation durch asymmetrische kryptographische Verfahren ein bewährtes Mittel um Berechtigungen nachzuweisen. Zertifikate sind strukturierte Daten, die die Authentizität und/oder weitere Eigenschaften/Berechtigungen des Eigentümers eines öffentlichen Schlüssels (Signaturprüfschlüssel) dokumentieren und durch eine unabhängige, glaubwürdige Instanz (Zertifizierungsdienstanbieter/ZDA), im Allgemeinen die das Zertifikat zuteilende Zertifizierungsstelle, bestätigen. Zertifikate werden in der Regel einem breiten Personenkreis zur Verfügung gestellt, um diesem eine Prüfung elektronischer Signaturen auf Authentizität und Gültigkeit zu ermöglichen.

Ein Zertifikat kann einer elektronischen Signatur zugeordnet sein, wenn der zu dem öffentlichen Schlüssel gehörende private Schlüssel zur Generierung der zu prüfenden elektronischen Signatur verwendet wurde. Dadurch, dass ein ZDA ein Zertifikat in Assoziation mit einem öffentlichen Schlüssel der Allgemeinheit zur Verfügung stellt, ermöglicht ein ZDA den Nutzern asymmetrischer Kryptosysteme den öffentlichen Schlüssel einer Identität, beispielsweise einer Person, einer Organisation, einem Energie- oder Computersystem, zuzuordnen.

Unter einer "verschlüsselten Ende-zu-Ende-Verbindung" bzw. einem "verschlüsselten Ende-zu-Ende-Übertragungskanal" wird hier eine Verbindung zwischen einem Sender und einem Empfänger mit einer Ende-zu-Ende-Verschlüsslung verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, sodass Zwischenstationen aufgrund der Verschlüsslung keine Kenntnis vom Inhalt der übertragenen Daten erlagen können. Die Verbindung wird durch die Verschlüsselung kryptografisch abgesichert, um ein Ausspähen und/oder eine Manipulation der Übertragung zu verhindern, wobei hierzu ein sogenanntes Secure-Messaging-Verfahren eingesetzt werden kann. Eine Ende-zu-Ende-Verschlüsslung beruht beispielsweise auf zwei symmetrischen kryptographischen Schlüsseln, wobei ein erster der symmetrischen Schlüssel zum Verschlüsseln von Nachrichten und ein zweite der symmetrischen Schlüssel zum Authentifizieren des Senders der Nachricht dient.

Ein Schlüssel zum Authentifizieren eines Senders einer Nachricht im Zuge eines Secure-Messaging-Verfahrens kann beispielsweise zum Erstellen eines Nachrichtenauthentifizierungscodes (Message Authentication Code, MAC) dienen. Mittels eines MAC lässt sich Gewissheit über den Ursprung der Nachrichten erhalten und deren Integrität verifizieren. MAC-Algorithmen erfordern zwei Eingabeparameter, erstens die zu schützenden Daten und zweitens einen geheimen Schlüssel. Aus diesen beiden wird ein Nachrichtenauthentifizierungscode in Form einer Prüfsumme berechnet. Der Sender einer Nachricht berechnet für die zu übermittelnden Daten der Nachricht einen MAC und sendet die Nachricht zusammen mit dem MAC an den Empfänger. Der Empfänger berechnet den MAC zu der empfangenen Nachricht mit seinem Schlüssel und vergleicht den berechneten MAC mit dem empfangenen MAC. Aus einer Übereinstimmung beider Werte folgt, dass die Nachricht von einer Partei abgeschickt wurde, welche Zugriff auf den geheimen Schlüssel besitzt, und die Nachricht während der Übertragung nicht verändert wurde.

Ein Dateneigentümer könnte also beispielsweise eine Datensammlung mit medizinischen Daten, Texten oder dergleichen erstellen und die einzelnen Datenmengen bzw. Datensätze gemäß einer Verschlagwortung verschlüsseln, wobei die Verschlagwortung einem Klassifikationsschema entspricht. So könnte eine Datenmenge in Form eines Aufsatzes zum menschlichen Gehirn den Klassifikationsparameterwerten "Mensch", "Gehirn" und "Neuron" zugeordnet werden. Die Zuordnung zu den entsprechenden Klassifikationsparameterwerten kann beispielsweise durch den Dateneigentümer erfolgen oder durch einen Suchalgorithmus, welcher den Aufsatz automatisch gemäß einem vordefinierten Klassifikationsschema nach Klassifikationsparameterwerten bzw. Schlagwörtern durchsucht.

Die Klassen-ID der entsprechenden Klasse umfasst beispielsweise die Klassifikationsparameterwerte "Mensch", "Gehirn" und "Neuron", welche die Klasse definieren. So kann die Klassen-ID beispielsweise "Mensch.Gehirn.Neuron" sein. Der Aufsatz kann durch einen oder mehrere sich aus der Klassen-ID eindeutig ergebende öffentlichen Schlüssel zu den Begriffen "Gehirn", "Neuron", "Mensch" verschlüsselt werden.

Nach Ausführungsformen handelt es sich bei dem Klassifikationsschema um ein hierarchisches Klassifikationsschema, wobei das Klassifikationsschema eine hierarchische Struktur der Klassifikationsparameter gemäß derer die Klassifikationsparameter geordnet werden. Beispielsweise handelt es sich bei der hierarchischen Struktur um eine Baumstruktur, wobei sich der klassenabhängige öffentliche kryptographische Schlüssel aus einem Durchgang durch den entsprechenden Baum von der Wurzel bis zu der Klasse ergibt, welcher der Aufsatz zugeordnet ist. Im zuvor genannten Beispiel kann die hierarchische Struktur der Klassifikationsparameterwerte wie folgt aussehen: "Mensch", "Gehirn" und "Neuron". Hieraus ergibt sich etwa die Klassen-ID "Mensch.Gehirn.Neuron" mit welcher ein klassenabhängiger öffentlicher kryptographischer Schlüssel zum Verschlüsseln der entsprechend Klasse berechnet werden kann. Umfasst die Klassen-ID eine Mehrzahl von Klassifikationsparameterwerte, kann eine Verschlüsselung mit einem klassenabhängigen öffentlichen kryptographischen Schlüssel, welcher unter Verwendung der entsprechenden Mehrzahl von Klassifikationsparameterwerte berechnet wurde, den Vorteil haben, dass eine mehrfache Verschlüsselung desselben Textes mit einer Mehrzahl von klassenabhängigen öffentlichen kryptographischen Schlüssel, welche jeweils nur auf einem einzigen Klassifikationsparameterwert beruhen, vermieden werden kann.

Eine geeignetes Klassifikationsschema zur Klassifikation von Datenmengen, d.h. geeignete Klassifikationsparameter und entsprechende Klassifikationsparameterwerte sowie eine Struktur der entsprechenden Klassifikationsparameter, können beispielsweise durch maschinelles Lernen (engl. "machine learning") bestimmt werden oder in Form eines vordefinierten Klassifikationsschema bereitgestellt werden, wie beispielsweise die "Internationale statistische Klassifikation der Krankheiten und verwandter Gesundheitsprobleme" (engl. "International Statistical Classification of Diseases and Related Health Problems", abgekürzt "ICD") bei medizinischen Anwendungen. Das Klassifikationsschema kann beispielsweise durch maschinelles Lernen desjenigen Computersystems bestimmt werden, welches auch die Verschlüsselung vornimmt. Wird das Klassifikationsschema durch einen Messdaten erfassenden Sensor bestimmt, so wird das Klassifikationsschema beispielsweise an ein Computersystem des Dateneigentümers weitergleitet. Ein vordefiniertes Klassifikationsschema wird dem die Daten verschlüsselnden Computersystem beispielsweise von einem Computersystem des Dateneigentümers bereitgestellt.

Die Klassifikation erfolgt beispielsweise in Form einer maschinellen Klassifikation, welche eine formale Methode des Entscheidens in neuen Situationen aufgrund erlernter Strukturen darstellt. Die Klassifikation kann dabei als Mustererkennung bzw. überwachtes Lernen (engl. "supervised learning") implementiert sein, wobei Klasseneinteilungen vorgegeben werden, beispielsweise durch Stichproben. Im Gegensatz dazu kann das maschinelle Lernen auch in Form von nichtüberwachtem Lernen (engl. "unsupervised learning") implementiert sein, bei welchem die Klassen der Daten nicht vorgegeben sind, sondern ebenfalls erlernt werden. Dabei können im Falle eines bestärkenden Lernens (engl. "reinforcement learning") Informationen, beispielsweise durch den Eigentümer der Daten, hinzukommen, ob eine erlernte Klasseneinteilung korrekt bzw. passend ist oder nicht.

Durch maschinelles Lernen können also Strukturen und Gesetzmäßigkeiten in einer Datenmenge, den sog. Lerndaten, identifiziert werden. Durch maschinelles Lernen kann ein Computersystem auch unbekannte Daten analysieren und beurteilen. Beim nichtüberwachten Lernen sind keine Zielwerte vorgegeben. Das Computersystem versucht, in der Datenmenge eine Struktur bzw. ein Muster zu erkennen, welches von einer Zufallsmenge abweicht. Ein Algorithmus zum nichtüberwachten maschinellen Lernen erzeugt für eine gegebene Datenmenge ein Modell, das die Struktur der Datenmenge beschreibt. Dabei werden beispielsweise Clustering-Verfahren verwendet, welche charakteristische Strukturen bzw. Muster erkennen und die Daten in entsprechende Klassen einteilen. Das Computersystem erstellt somit selbständig Klassifikatoren, d.h. Klassifikationsschemata, nach denen Eingabedaten gemäß ihren Strukturen eingeteilt werden. Ein Beispiel für ein solches Clustering-Verfahren ist der sog. Expectation-Maximization-Algorithmus (EM-Algorithmus). Der EM-Algorithmus legt iterativ Parameter eines Modells bzw. Klassifikationsschemas so fest, dass die gesehenen Daten optimal erklärt werden. Dabei wird mit einem zufällig gewählten Modell gestartet und es wird versucht abwechselnd die Zuordnung der Daten zu den einzelnen Klassen des Modells (Expectation-Schritt) und die Parameter des Modells an die neueste Zuordnung (Maximization-Schritt) zu verbessern. Findet keine wesentliche Verbesserung mehr statt, wird das Verfahren beendet. Eine Anwendung des EM-Algorithmus findet sich beispielsweise in den Hidden Markov Models (HMMs). Weitere Beispiele für Clustering-Algorithmen sind K-Means-Algorithmen, fuzzy C-Means-Algorithmen, oder Affinity-Propagation-Algorithmen. Für das maschinelle Lernen können ferner künstliche neuronale Netz verwendet werden. Ein solches künstliche neuronale Netz orientiert sich beispielsweis an der Ähnlichkeit von Eingabedaten und adaptiert dementsprechend Gewichtungsfaktoren zwischen Neuronen des Netzes. Weitere Beispiele für nichtüberwachtes Lernen sind Deep Autoencoder, Survey Propagation (SP), Deep Belief Network (DBN), BayesNP, Hierarchischer Temporalspeicher (HTM), Autoencoder Neural Network, Sparse Coding, Restricted Boltzmann Machine (RBM) oder Gaussian Mixture Models (GMM).

Nach Ausführungsformen wird das maschinelle Lernen zum Ermitteln eines Klassifikationsschemas über unverschlüsselte Daten, beispielsweise beim Dateneigentümer, oder über einen Teil der entsprechenden Daten ausgeführt. Dabei handelt es sich beispielsweise insbesondere um nichtüberwachtes Lernen.

Nach Beispielen, die nicht zum Umfang der Ansprüche gehören, wird die Datenmenge unter Verwendung der klassenbasierten Verschlüsselung mit dem klassenabhängigen ersten öffentlichen kryptographischen Schlüssel verschlüsselt und die Metadaten bleiben unverschlüsselt. Somit kann beispielsweise ein ungehinderter Zugang zu den Metadaten gewährt werden, welcher es erlaubt diese zu analysieren und statistisch auszuwerten. Jedoch wird kein ungehinderter Zugang zu der den Metadaten zugrundeliegenden Datenmenge gewährt. Auf Basis von Analyseergebnissen für Metadaten können beispielsweise relevante Datenmengen aus einer Mehrzahl von Datenmengen identifizieren werden. Die identifizierten Datenmengen können beispielsweise vom Dateneigentümer auf ein Nutzercomputersystem heruntergeladen, mit dem klassenabhängigen ersten privaten kryptographischen Schlüssel entschlüsselt und verarbeiten werden. Ferner kann beispielsweise ein Dritter, welcher auf Basis des ungehinderten Zugangs zu den Metadaten relevante Datenmengen identifiziert hat, bei dem Dateneigentümer anfragen, ob ihm der Dateneigentümer Zugang zu diesen relevanten Datenmengen gewährt. In diesem Fall liegt es in der Hand des Dateneigentümers, ob er dem Dritten den klassenabhängigen ersten privaten kryptographischen Schlüssel bereitstellt und damit Zugang zu den relevanten Datenmengen gewährt oder nicht. Alternativer Weise kann der Dateneigentümer die relevanten Datenmengen selbst herunterladen, entschlüsseln und dem Dritten zur Verfügung stellen. Ferner kann der klassenabhängige erste private kryptographische Schlüssel nach Ausführungsformen von einem Key-Providercomputersystem einer vertrauenswürdigen Instanz verwaltet und, wenn notwendig, zur Verfügung gestellt werden. Dabei kann die vertrauenswürdige Instanz den klassenabhängigen ersten privaten kryptographischen Schlüssel dem anfragenden Dritten zur Entschlüsselung der relevanten Datenmengen zur Verfügung stellen oder die relevanten Datenmengen unter Verwendung des klassenabhängigen ersten privaten kryptographischen Schlüssels entschlüsseln und dem anfragenden Dritten die entschlüsselten Datenmengen zur Verfügung stellen. Voraussetzung hierfür kann beispielsweise eine Freigabe der relevanten Datenmengen für den Dritten durch den Dateneigentümer sein. Der Empfänger des klassenabhängigen ersten privaten kryptographischen Schlüssels erhält durch diesen allerdings nur Zugriff auf Datenmengen derjenigen Klasse, welcher der klassenabhängige erste private kryptographische Schlüssel zugeordnet ist.

Erfindungsgemäß werden die Metadaten unter Verwendung der klassenbasierten Verschlüsselung mit dem klassenabhängigen ersten öffentlichen kryptographischen Schlüssel verschlüsselt. Die Datenmenge wird unter Verwendung einer klassenunabhängigen Verschlüsselung mit einem klassenunabhängigen zweiten öffentlichen kryptographischen Schlüssel verschlüsselt. Dies hat den Vorteil, dass durch Bereitstellen eines zu dem klassenabhängigen ersten öffentlichen kryptographischen Schlüssel gehörenden klassenabhängigen ersten privaten kryptographischen Schlüssel ein klassenabhängiger Zugang zu den Metadaten gewährt werden kann. Der Zugriff auf die den Metadaten zugrundeliegende Datenmenge, genauer gesagt auf die von der Datenmenge umfassten Daten, bleibt jedoch verwehrt. Allein der Besitzer eines klassenunabhängigen zweiten privaten kryptographischen Schlüssels, welcher dem klassenunabhängigen zweiten öffentlichen kryptographischen Schlüssel zugeordneten ist, ist in der Lage, die verschlüsselte Datenmenge zu entschlüsseln und auf die darin enthaltenen Daten zuzugreifen. Die Klassenabhängigkeit der Verschlüsselung erlaubt es des Weiteren, den Zugriff auf Metadaten bestimmter Klassen zu beschränken, während der Zugriff auf Metadaten anderer Klassen verwehrt bleibt.

Nach Beispielen, die nicht zum Umfang der Ansprüche gehören, werden die Datenmenge und die Metadaten unter Verwendung der klassenbasierten Verschlüsselung mit dem klassenabhängigen ersten öffentlichen kryptographischen Schlüssel verschlüsselt. Diese Beispiele Z können den Vorteil haben, dass die Datenmenge und die Metadaten mit demselben klassenabhängigen öffentlichen kryptographischen Schlüssel verschlüsselt sind und somit mit demselben klassenabhängigen privaten kryptographischen Schlüssel entschlüsselt werden können. Beim Entschlüsseln erhält der Besitzer des klassenabhängigen privaten kryptographischen Schlüssels somit auch Zugriff auf die Datenmenge und kann diese verarbeiten, z.B. analysieren.

Da erfindungsgemäß nur die Metadaten klassenabhängig verschlüsselt, verschlüsselt werden, die den Metadaten zugeordneten Datenmengen hingegen auf herkömmliche Weise, d.h. klassenunabhängig, kann ein Dienstleister nach der Entschlüsselung der Metadaten zwar nur in auf die Metadaten beschränktem Umfang Auswertungen ausführen, dabei aber beispielsweise statistische Auswertungen wie etwa die Häufigkeit des Auftauchens der Klassen-ID in einem bestimmten Zeitintervall bereitstellen. Die Sicherheit des Systems kann durch Verwendung eines probabilistischen kryptographischen Verfahrens zusätzlich erhöht werden.

Nach Ausführungsformen verwendet die klassenbasierte Verschlüsselung ein probabilistisches Verschlüsselungsverfahren. Ausführungsformen können den Vorteil haben, dass bei Verwendung eines probabilistischen Verschlüsselungsverfahren anhand des verschlüsselten Texts bzw. Chiffrats nicht auf den zugrundeliegenden Klartext geschlossen werden kann. Sind zwei Chiffrate unterschiedlich, kann diesen dennoch derselbe Klartext zugrundeliegend. Selbst wenn ein unbefugter Dritter also beispielsweise Kenntnis von dem einem Chiffrat zugrundeliegenden Klartext erhält, weiß er nicht wie oft ein beliebiger Satz von Chiffraten denselben Klartext noch einmal umfasst.

Ein probabilistischer Verschlüsselungsalgorithmus ist ein Algorithmus, welcher aus einem Klartext unter Verwendung eines öffentlichen kryptographischen Schlüssels einen Geheimtext bzw. Chiffrat erzeugt, wobei es zu einem Klartext mehrere mögliche Geheimtexte gibt und es zufallsabhängig ist, welcher der möglichen Geheimtexte erzeugt wird. Eine probabilistische Verschlüsselung kann beispielsweise unter Verwendung eines von Algorithmen, wie etwa den ElGamal-Algorithmus, Paillier-Algorithmus, oder einem Algorithmus unter Verwendung eines Zufallsorakels wie beispielsweise OAEP, implementiert werden.

Nach Ausführungsformen werden die Metadaten unter Verwendung der klassenbasierten Verschlüsselung mit dem klassenabhängigen ersten öffentlichen kryptographischen Schlüssel verschlüsselt und die Datenmenge wird unter Verwendung einer klassenunabhängigen Verschlüsselung mit einem klassenunabhängigen zweiten öffentlichen kryptographischen Schlüssel verschlüsselt. Dies erlaubt es mithin, die Metadaten, welche bestimmten Klassen zugeordnet sind, zu entschlüsseln, während die zu den Metadaten gehörenden Datenmengen weiterhin verschlüsselt bleiben. Im Falle eines Cloud-Szenarios erlaubt dies, dass einem Cloud-Dienstleister Zugang zu den Metadaten gewährt wird, welche dieser analysieren und statistisch auswerten kann. Er erhält jedoch keinen Zugang zu den zugrundeliegenden Datenmengen, die ebenfalls in der Cloud gehostet sind, zu denen aber alleine der Dateneigentümer Zugang besitzt. Der Cloud-Dienstleister präsentiert dem Dateninhaber die Ergebnisse seiner Analyse, beispielsweise in Form eines Diagramms, wie etwa eines Histogramms. Der Dateneigentümer kann auf Basis der Analyseergebnisse relevante Datenmengen identifizieren, diese auf ein Nutzercomputersystem herunterladen, mit seinem klassenunabhängigen zweiten privaten kryptographischen Schlüssel entschlüsseln und verarbeiten. Der klassenunabhängige zweite private kryptographische Schlüssel ist dem klassenunabhängigen zweiten öffentlichen kryptographischen Schlüssel zugeordnet und bildet mit diesem zusammen ein asymmetrisches Schlüsselpaar. Der klassenunabhängige zweite private kryptographische Schlüssel ist beispielsweise in einem geschützten Speicherbereich eines Speichers des Nutzercomputersystems des Dateneigentümers gespeichert.

Dieser Ansatz kann insbesondere für Big-Data-Szenarien von Vorteil sein, in denen es darum geht, sehr große Datenvolumen mit einer sehr großen Anzahl von Datenmengen handzuhaben, wobei das Datenvolumen zu groß, zu komplex, zu schnelllebig und/oder zu schwach strukturiert ist, um es auf einem lokalen Computersystem des Dateneigentümers auszuwerten. Anhand einer Auswertung der Metadaten wie oben beschrieben können die Datenmengen aus dem großen Datenvolumen identifiziert werden, welche für eine bestimmte Fragestellung von Interesse sind. Beispielsweise wird eine Korrelation von Klassifikationsparameterwerten identifiziert, die für einen bestimmten Sachverhalt, wie etwa das Auftreten einer Krankheit, charakteristisch ist. Ferner kann identifiziert werden, welche Datenmengen diese Korrelation von Klassifikationsparameterwerten aufweisen. Die so identifizierten Datenmengen können dann von dem Dateneigentümer im Detail analysiert werden. Hierbei behält der Dateneigentümer die Verfügungshoheit über alle Daten.

Nach Ausführungsformen ist jeder Klasse des Klassifikationsschemas jeweils ein individueller klassenabhängiger öffentlicher kryptographischer Schlüssel zugeordnet, welcher unter Verwendung der Klassen-ID der entsprechenden Klasse und eines klassenunabhängigen öffentlichen kryptographischen Hauptschlüssels berechnet ist. Dabei wird derselbe öffentliche kryptographische Hauptschlüssel zum Berechnen einer Mehrzahl der klassenabhängigen öffentlichen kryptographischen Schlüssel verwendet. Ausführungsformen können den Vorteil haben, Daten selektiv in Abhängigkeit von ihrer Klassenzuordnung verschlüsseln und entschlüsseln zu können. Nach Ausführungsformen wird derselbe öffentliche kryptographische Hauptschlüssel zum Berechnen aller klassenabhängigen öffentlichen kryptographischen Schlüssel verwendet, welche von einer der Klassen des Klassifikationsschemas abhängen.

Nach Ausführungsformen weist das Klassifikationsschema eine monohierarchische Klassifikationsstruktur auf, welche zumindest einen gewurzelten Baum umfasst. Den einzelnen Hierarchieebenen der Klassifikationsstruktur ist jeweils ein Klassifikationsparameter und den einzelnen Klassen der jeweiligen Hierarchieebene jeweils ein Klassifikationsparameterwert zugeordnet. Die Klassen-IDs der einzelnen Klassen umfassen jeweils die Klassifikationsparameterwerte, die den Klassen entlang des Pfads von einer Wurzel des Baums bis zu der durch die entsprechende Klassen-ID identifizierten Klasse zugeordnet sind.

Nach Ausführungsformen gehört der klassenabhängige erste öffentliche kryptographische Schlüssel zu einer Gruppe von öffentlichen kryptographischen Schlüsseln. Jeder Klasse ist einer der öffentlichen kryptographischen Schlüssel der Gruppe zugeordnet und jeder der öffentlichen kryptographischen Schlüssel der Gruppe ist unter Verwendung des klassenunabhängigen öffentlichen kryptographischen Hauptschlüssels und des von der Klassen-ID umfassten Klassifikationsparameterwerts derjenigen Klasse berechnet, welcher der entsprechende öffentliche kryptographische Schlüssel zugeordnet ist. Zudem wird jeder von den Metadaten umfasste Klassifikationsparameterwert mit dem öffentlichen kryptographischen Schlüssel verschlüsselt, welcher der Klasse des entsprechenden Klassifikationsparameterwerts zugeordnet ist. Ausführungsformen können den Vorteil haben, dass sie es erlauben, die Metadaten mit öffentlichen kryptographischen Schlüsseln zu verschlüsseln, welche von den Klassifikationsparameterwerten abhängen, welche die Metadaten umfassen. Somit können zum Entschlüsseln anhand der Klassifikationsparameterwerte gezielt private kryptographische Schlüssel gewählt werden, die von Klassifikationsparameterwerten abhängen, welche einer Analyse unterzogen werden sollen. Die so gewählten privaten kryptographischen Schlüssel können beispielsweise auf eine Vielzahl von Metadaten angewandt werden, wobei alle Metadaten, welche die gesuchten Klassifikationsparameterwerte umfassen, entschlüsselt werden.

Nach Ausführungsformen können die Klassifikationsparameterwerte der Metadaten jeweils einzeln mit einem öffentlichen kryptographischen Schlüssel verschlüsselt sein, zu dessen Berechnung als einziger Klassifikationsparameterwert der mit diesem Schlüssel zu verschlüsselnde Klassifikationsparameterwert verwendet ist. Dies kann den Vorteil haben, dass es möglich ist, von den Metadaten umfasste Klassifikationsparameterwerte einzelnen zu entschlüsseln. Ein mit der Auswertung von Metadaten beauftragter Dienstleister erhält somit nur Zugang zu einer vom Dateneigentümer festgelegten Auswahl von Klassifikationsparameterwerten.

Nach Ausführungsformen kann die Verschlüsselung auch in einer verschachtelten Form basierend auf einer Hierarchie der verwendeten öffentlichen kryptographischen Schlüssel erfolgen.

Nach Ausführungsformen erfolgt die Verschlüsselung der von den Metadaten umfassten Klassifikationsparameterwerte in verschachtelter Form. Mit dem verschlüsselten Klassifikationsparameterwert der ersten Klasse beginnend wird einem Pfad von der ersten Klasse zu der Wurzel des Baums folgend jeweils das Ergebnis der letzten Verschlüsselung mit dem Klassifikationsparameterwert der nächsten Klasse der nächsthöheren Hierarchieebene kombiniert und mit dem öffentlichen kryptographischen Schlüssel verschlüsselt, welcher der entsprechenden nächsten Klasse zugeordnet ist. Ausführungsformen können den Vorteil haben, dass die Verschlüsselung der hierarchischen Klassifikationsstruktur entspricht. Zum vollständigen Entschlüsseln der verschlüsselten Metadaten der ersten Klasse werden nacheinander dem Pfad von der Wurzel des Baums bis zu der ersten Klasse folgend mit den öffentlichen kryptographischen Schlüsseln entschlüsselt, welche jeweils den entsprechenden Klassen auf dem Pfad zugeordnet sind.

Beispielsweise wurde eine Datenmenge unter Verwendung der Klassifikationsparameterwerte "Mensch", "Gehirn" und "Neuron" der Klasse "Mensch.Gehirn.Neuron" zugeordnet, welche eine Unterklasse der Klasse "Mensch.Gehirn", die wiederrum eine Unterklasse der Klasse "Mensch" ist. Dies entspricht beispielsweise einem Baum mit der Klasse "Mensch" als Wurzel und der Klasse "Mensch.Gehirn.Neuron" als Blatt, während die Klasse "Mensch.Gehirn" einen inneren Knoten darstellt. Dabei umfasst die Klasse mit Klassen-ID "Mensch" alle Daten, denen der Parameterwert "Mensch" zugeordnet ist. Die Klasse mit Klassen-ID "Mensch.Gehirn" umfasst alle Daten, denen ferner der Parameterwert "Gehirn" zugeordnet ist und die Klasse mit Klassen-ID "Mensch.Gehirn.Neuron" schließlich alle Daten, denen ferner der Parameterwert "Neuron" zugeordnet ist. Die Metadaten der Klasse "Mensch.Gehirn.Neuron" umfassen beispielsweise die Klassifikationsparameterwerte "Mensch", "Gehirn" und "Neuron". Im Zuge der Verschlüsselung wird der Klassifikationsparameterwert "Neuron" mit einem öffentlichen kryptographischen Schlüssel verschlüsselt, welcher unter Verwendung des Klassifikationsparameterwerts "Neuron" berechnet ist. Die Kombination aus dem verschlüsselten Klassifikationsparameterwert "Neuron" und dem Klassifikationsparameterwert "Gehirn" wird mit einem öffentlichen kryptographischen Schlüssel verschlüsselt, welcher unter Verwendung des Klassifikationsparameterwerts "Gehirn" berechnet ist. Das resultierende Chiffrat wird schließlich mit dem Klassifikationsparameterwert "Mensch" kombiniert und mit einem öffentlichen kryptographischen Schlüssel verschlüsselt, welcher unter Verwendung des Klassifikationsparameterwerts "Mensch" berechnet ist.

Um die resultierenden verschlüsselten Metadaten wieder zu entschlüsseln, müssen die den zuvor genannten öffentlichen kryptographischen Schlüsseln zugeordneten privaten kryptographischen Schlüssel in umgekehrter Reihenfolge angewendet werden. Wird auf die Metadaten einer Mehrzahl von Datenmengen ein privater kryptographischer Schlüssel angewendet, welcher dem öffentlichen kryptographischen Schlüsseln zugeordneten ist, der auf dem Parameterwert "Mensch" beruht, so wird in allen Metadaten, die zu dem Baum mit der Wurzel "Mensch" gehören, der Parameterwert "Mensch" entschlüsselt. Ein Dienstleister erfährt somit beispielsweise wie viele und welche der Datenmengen der Klasse "Mensch" zugehörig sind. Dieses Aufdecken der Zuordnung der Datenmengen zu dem durch den Baum mit der Wurzel "Mensch" gegebenen Klassifikationsschema kann auf diese Weise von der Wurzel aus Hierarchieebene für Hierarchieebene unterschiedlichen Pfaden zu den Blättern des Baums folgend analysiert werden.

Ein Baum bezeichnet einen Typ von Graphen gemäß Graphentheorie, welcher zusammenhängend ist und keine geschlossenen Pfade enthält, d.h. kreisfrei ist. Ein Baum stellt eine monohierarchische Struktur dar. Eine Mehrzahl von Bäumen bildet einen sogenannten Wald. Im zuvor genannten Beispiel kann es neben dem Baum mit der Wurzel "Mensch" weitere Bäume etwa mit den Wurzeln "Schimpanse" und "Maus" geben.

Ein gerichteter Baum ist ein gerichteter zusammenhängender kreisfreier Graph. Ein Graph G ist ein geordnetes Paar (V, E), wobei V eine Menge von Knoten (engl. "vertices") und E eine Menge von Kanten (engl. "edges") bezeichnet. Im Fall eines gerichteten Graphs ist E eine Menge gerichteter Kanten mit E ⊆ V x V.

Ein gewurzelter Baum ist ein gerichteter von einem Knoten aus stark zusammenhängender kreisfreier Graph. Der den starken Zusammenhang definierende Knoten w wird Wurzel genannt, wobei ein Baum genau eine Wurzel umfasst. Ein Out-Tree ist ein gerichteter Graph mit einer Wurzel, für den gilt, dass jeder Knoten durch genau einen gerichteten Pfad von der Wurzel aus erreichbar ist. Im Falle eines Out-Trees hat die Wurzel somit Eingangsgrad 0 und alle inneren Knoten weisen einen positiven Ausgangsgrad auf. Alle Knoten mit Ausgangsgrad 0 heißen Blätter. Werden die Richtungen aller Kanten eines solchen Graphen invertiert, so wird der Out-Tree zu einem In-Tree, bei welchem die Wurzel von jedem Knoten aus durch genau einen gerichteten Pfad erreichbar ist. Für einen von der Wurzel verschiedenen Knoten bezeichnet man bei einem Out-Tree den Knoten, durch den er mit einer eingehenden Kante verbunden ist, als Elternknoten oder Vorgänger. Als Vorfahren bezeichnet man alle Knoten, die entweder Elternknoten oder Vorgänger des Elternknotens des entsprechenden Knotens sind. Umgekehrt bezeichnet man alle Knoten, die von einem beliebigen Knoten aus durch eine ausgehende Kante verbunden sind, als Kinderknoten oder Nachfolger. Als Nachfahren bezeichnet man alle Knoten, die entweder Kinderknoten oder Nachfolger der Kinderknoten des entsprechenden Knotens sind. Als Geschwister werden in einem Out-Tree Knoten bezeichnet, die den gleichen Elternknoten besitzen.

Nach Ausführungsformen umfassen die Metadaten ferner eine Eigentümer-ID eines Eigentümers, dem die Datenmenge zugeordnet ist. Zur Berechnung des klassenabhängigen ersten öffentlichen kryptographischen Schlüssels wird ferner die Eigentümer-ID verwendet. Ausführungsformen können den Vorteil haben, dass die Verschlüsselung zusätzlich eigentümerabhängig ist. So können für unterschiedliche Dateneigentümer unterschiedliche klassenabhängige öffentliche kryptographische Schlüssel mit denselben Klassen-IDs berechnet werden. Dabei kann insbesondere derselbe öffentliche kryptographische Hauptschlüssel verwendet werden.

Beispielsweise kann das asymmetrische Hauptschlüsselpaar einem Klassifikationsschema zugeordnet sein. Im Falle einer Mehrzahl von Klassifikationsschemata werden beispielsweise eine Mehrzahl von asymmetrischen Hauptschlüsselpaaren bereitgestellt, wobei jedes der asymmetrischen Hauptschlüsselpaare jeweils genau einem der Klassifikationsschemata zugeordnet ist.

Die Verwendung einer Eigentümer-ID zur Berechnung des öffentlichen kryptographischen Schlüssels kann beispielsweise vorteilhaft sein, wenn dasselbe Klassifikationsschema zur Verschlüsselung von Daten unterschiedlicher Eigentümer verwendet wird. Beispielsweise verschlüsselt das datenverschlüsselnde Computersystem Daten von unterschiedlichen Eigentümern. Für einen Dateneigentümer mit der Eigentümer-ID #XYZ kann beispielsweise eine Kombination nach dem Schema KLASSE_A.#XYZ für die Berechnung eines klassenabhängigen öffentlichen kryptographischen Schlüssels verwenden werden, wobei KLASSE_A die Klassen-ID der Klasse ist, für welche der klassenabhängigen öffentlichen kryptographischen Schlüssel berechnet wird. Bei der Eigentümer-ID #XYZ kann es sich beispielsweise um eine Kundennummer oder einen Nutzernamen handeln, welcher dem Eigentümer zugeordnet ist. Beispielsweise ist die Eigentümer-ID eine ID, unter welcher der Eigentümer bei dem die asymmetrischen Hauptschlüsselpaare verwaltenden Computersystem, etwa einem Trust Center, registriert ist.

Nach Ausführungsformen umfassen die Metadaten ferner eine Zeitangabe. Zur Berechnung des klassenabhängigen ersten öffentlichen kryptographischen Schlüssels wird ferner die Zeitangabe verwendet. Durch die Verwendung von Zeitangaben entsteht ein dynamisches Schlüsselverwaltungsverfahren. Ausführungsformen können den Vorteil haben, dass sich der resultierende öffentliche kryptographische Schlüssel bzw. das zugehörige Schlüsselpaar auf Daten beziehen, welche einem bestimmten Zeitraum zugeordnet sind. Beispielsweise sind die Daten in dem entsprechenden Zeitraum entstanden. Nach Ausführungsformen handelt es sich bei einer solchen Zeitangabe beispielsweise um einen Identifikator eines Zeitintervalls oder einen Identifikator einer Datengeneration bzw. Datenversion. Auf diese Weise kann ein Revozierungsmechanismus (engl. "revocation mechanism") implementiert werden. Da die entsprechenden öffentlichen kryptographischen Schlüssel jeweils auf einen bestimmten Zeitraum beschränkt sind, verlieren sie nach Ablauf dieses Zeitraums automatisch ihre Gültigkeit bzw. werden durch neue öffentliche kryptographische Schlüssel ersetzt, welche für die Verschlüsselung neuer Daten verwendet werden. Zum Entschlüsseln von verschlüsselten Daten, welche einem bestimmten Zeitraum zugeordnet sind, wird ein privater kryptographischer Schlüssel benötigt, welcher demselben Zeitraum zugeordnet ist. Selbst wenn einer dieser privaten kryptographischen Schlüssel kompromittiert werden sollte, so können mit einem unrechtmäßig erlangten privaten kryptographischen Schlüssel nur Daten aus dem entsprechenden Zeitraum entschlüsselt werden, jedoch keine anderen Daten.

Nach Ausführungsformen geben die Zeitangaben ein Ablaufdatum für eine Entschlüsselung der Daten an. Beispielsweise stellt ein Trust Center nach Ablauf des entsprechenden Datums keine privaten kryptographischen Schlüssel mehr bereit oder es stellt private kryptographische Schlüssel nur noch für den Dateneigentümer bereit, welcher sich hierzu authentifizieren muss. Eine solche Authentifikation kann beispielsweise über eine Signatur mit einem dem Dateneigentümer zugeordneten privaten kryptographischen Schlüssel und einem dem entsprechenden privaten kryptographischen Schlüssel zugeordneten Zertifikat, welches den Dateneigentümer identifiziert und einen öffentlichen kryptographischen Schlüssel zum Prüfen der Signatur bereitstellt. Nach Ausführungsformen ist ein solche Zertifikat Teil einer PKI. Sollen die verschlüsselten Daten auch nach Ablauf des Ablaufdatums entschlüsselt werden können, so können diese beispielsweise vor dem Ablaufdatum entschlüsselt und mit einem neuen öffentlichen kryptographischen Schlüssel verschlüsselt werden, welcher einem neuen Zeitraum mit einem neuen Ablaufdatum zugeordnet ist. Hierbei wird beispielsweise auch die Zeitangabe der Metadaten auf das neue Ablaufdatum aktualisiert.

Nach Ausführungsformen umfasst das Nutzercomputersystem den klassenunabhängigen öffentlichen kryptographischen Hauptschlüssel und berechnet den klassenabhängigen ersten öffentlichen kryptographischen Schlüssel unter Verwendung des klassenunabhängigen öffentlichen kryptographischen Hauptschlüssels. Ausführungsformen können den Vorteil haben, dass das verschlüsselnde Nutzercomputersystem die zur Verschlüsselung verwendeten klassenabhängigen öffentlichen kryptographischen Schlüssel selbst erstellen kann. Beispielsweise erstellt das verschlüsselnde Nutzercomputersystem auch die zu verschlüsselnden Datenmengen, sodass diese direkt nach ihrer Entstehung verschlüsselt werden können. Beispielsweise umfasst das Nutzercomputersystem einen Sensor, mit welchem die zu verschlüsselnden Daten erfasst werden. Für die Berechnung von klassenabhängigen öffentlichen kryptographischen Schlüsseln verwendet das Nutzercomputersystem beispielsweise ein oder mehrere vordefinierte Klassifikationsschemata. Nach Ausführungsformen legt das Nutzercomputersystem das Klassifikationsschema oder Teile davon selbst fest.

Nach Ausführungsformen umfasst das Verfahren ferner ein Senden der verschlüsselten Datenmenge und der verschlüsselten Metadaten über ein Netzwerk an ein Speichersystem, welches einen nichtflüchtigen Speicher umfasst. Zudem wird die verschlüsselte Datenmenge zusammen mit den verschlüsselten Metadaten in dem nichtflüchtigen Speicher gespeichert. Ausführungsformen können den Vorteil haben, dass eine Vielzahl von Datenmengen sicher gespeichert werden können. Ferner kann über das Netzwerk jederzeit ein Zugriff auf die Daten durch den Dateneigentümer ermöglicht werden. Beispielsweise ist das Speichersystem Teil einer Cloud-Umgebung.

Die Datenmenge wird beispielsweise durch ein Speichersystem in der Cloud gespeichert. Ferner soll auch eine Datenverarbeitung bzw. Datenauswertung der Daten durch einen Cloudprovider erfolgen. Nach Ausführungsformen erfolgt die Verschlüsselung des Datenbestandes bzw. der in die Cloud zu ladenden Datenmengen vor dem Upload. Die Verschlüsselung kann dabei beispielsweise durch den Dateneigentümer oder durch ein die Datenmengen erstellendes Computersystem, wie etwa einen Sensor, erfolgen. Die Metadaten und/oder Datenmengen die einem vorher festlegten Klassifikationsparameterwert oder einer Kombination von Klassifikationsparameterwerten entsprechen bzw. zugeordnet sind, werden jeweils mit einem klassenabhängigen öffentlichen kryptographischen Schlüssel verschlüsselt, welcher unter Verwendung einer Klassen-ID berechnet wird, die die entsprechenden Klassifikationsparameterwerte umfasst. Datenmengen, welche unterschiedlichen Klassen zugeordnet sind, die durch unterschiedliche Klassifikationsparameterwerte gekennzeichnet sind, werden somit auf unterschiedliche Weise verschlüsselt. Eine dritte Partei, die mit der Analyse des Datenbestandes betraut wird, kann klassenabhängige private kryptographische Schlüssel für einzelne Klassen beantragen und nach Erhalt der entsprechenden Schlüssel die Auswertung durchführen. Jedoch bleibt diese Auswertung auf die Klassen beschränkt, für welche die dritte Partei die zum Entschlüsseln notwendigen klassenabhängigen privaten kryptographischen Schlüssel erhalten hat.

Nach Ausführungsformen wird ferner ein klassenabhängiger erster privater kryptographischer Schlüssel durch ein Dienstcomputersystem empfangen. Das Dienstcomputersystem besitzt Zugriff auf die verschlüsselten Metadaten und/oder die verschlüsselte Datenmenge. Der klassenabhängige erste private kryptographische Schlüssel ist dem klassenabhängigen ersten öffentlichen kryptographischen Schlüssel zugeordnet und bildet mit diesem ein asymmetrisches Schlüsselpaar. Zudem werden die Metadaten und/oder die Datenmenge mit dem klassenabhängigen ersten privaten Schlüssel durch das Dienstcomputersystem entschlüsselt. Die entschlüsselten Metadaten und/oder die entschlüsselte Datenmenge werden durch das Dienstcomputersystem verarbeitet. Ausführungsformen können den Vorteil haben, dass dem Dienstcomputersystem, beispielsweise als Dienstanbieter, welcher mit einer Analyse der in dem Speichersystem gespeicherten Datenmengen beauftragt ist, durch klassenabhängige private kryptographische Schlüssel ein auf bestimmte Klassen beschränkter Zugriff auf die Datenmengen gewährt werden kann. Somit werden Daten beispielsweise für Analysen entschlüsselt, welche der Dateneigentümer legitimiert hat. Dabei bleibt er Zugang aber ausschließlich auf die von dem Dateneigentümer freigegebene Daten beschränkt, ohne dass das entschlüsselnde Dienstcomputersystem die Möglichkeit erhält, sich unerlaubterweise Zugriff auf nichtfreigegebene Daten zu verschaffen.

Nach Ausführungsformen umfasst ein Key-Providercomputersystem einen dem klassenunabhängigen öffentlichen kryptographischen Hauptschlüssel zugeordneten klassenunabhängigen privaten kryptographischen Hauptschlüssel. Der klassenabhängige erste private kryptographische Schlüssel wird durch das Key-Providercomputersystem unter Verwendung der Klassen-ID und des klassenunabhängigen privaten kryptographischen Hauptschlüssels berechnet. Ferner wird der klassenabhängige erste private kryptographische Schlüssel durch das Key-Providercomputersystem an das Dienstcomputersystem gesendet. Ausführungsformen können den Vorteil haben, dass der private kryptographische Hauptschlüssel sicher verwahrt und eine Verteilung von klassenabhängigen privaten kryptographischen Schlüsseln zur Entschlüsselung von Daten zentral verwaltet werden kann. Bei dem Key-Providercomputersystem handelt es sich beispielsweise um ein Computersystem einer unabhängigen Instanz, welche das asymmetrische Hauptschlüsselpaar erzeugt und insbesondere den privaten kryptographischen Hauptschlüssel sicher verwahrt. Bei dem Key-Providercomputersystem kann es sich ferner beispielsweise um ein Computersystem des Dateneigentümers handeln, womit der Dateneigentümer die Verfügungshoheit über das asymmetrische Hauptschlüsselpaar und insbesondere den privaten kryptographischen Hauptschlüssel innehat.

Bei dem Key-Providercomputersystem kann es sich ferner beispielsweise um ein Computersystem eines sog. Trust Centers handeln. Das Trust Center ist in diesem Fall für die Verteilung der jeder Klasse zugeordneten klassenabhängigen privaten kryptographischen Schlüssel zuständig. Der einer Klasse zugeordnete private kryptographische Schlüssel wird gebraucht, um die mit dem der Klasse zugeordneten öffentlichen kryptographischen Schlüssel verschlüsselte Datenmenge zu entschlüsseln, sodass sie beispielsweise ein Dienstleister verarbeiten kann. Das Trust Center überträgt beispielsweise gemäß einem dem Dienstleister von dem Dateneigentümer erteilten Auftrag die benötigten privaten Schlüssel an den Dienstleister. Der Dienstleister verwendet diese privaten Schlüssel, um von einem Speichersystem, etwa aus der Cloud, angeforderte verschlüsselte Daten zu verarbeiten. Dabei kann der Dienstleister nur Daten verarbeiten, für welche er die zugehörigen privaten kryptographischen Schlüssel von dem Computersystem des Trust Centers erhalten hat. Ausführungsformen können den Vorteil haben, dass sie einen Datenschutz auch gegenüber dem Dienstleister bieten, da dieser keinen Zugriff auf andere private kryptographische Schlüssel als die für die Ausführung einer bestimmten Aufgabe benötigten privaten kryptographischen Schlüssel erhält. Somit erhält der Dienstleister auch nur Zugriff auf die tatsächlich zu verarbeitenden Daten.

Die privaten kryptographischen Schlüssel können je nach Ausführungsbeispiel auf verschiedene Art und Wiese von dem Key-Providercomputersystem, beispielsweise einem Computersystem eines Trust Centers, zu dem Dienstcomputersystem eines Dienstleisters gelangen. Ferner kann auch eine Autorisierung des Dienstleisters zum Erhalt der privaten kryptographischen Schlüssel und damit einer Zugriffsberechtigung auf die entsprechenden Daten je nach Ausführungsform unterschiedlich belegt bzw. durch den Dateneigentümer bestätigt werden. Hierzu seien folgende beispielhafte Ausführungsformen erwähnt:
1. Der Dateneigentümer erstellt einen Auftrag, in dem die gewünschte Dienstleistung und der adressierte Dienstleister angegeben und die für den Auftrag benötigten klassenabhängigen privaten kryptographischen Schlüssel explizit, d.h. über die zur Verschlüsselung verwendeten öffentlichen kryptographischen Schlüssel oder die den entsprechenden Datenmengen zugeordneten Metadaten, oder implizit, d.h. über die Auftragsbeschreibung, identifiziert sind. Der Auftrag ist kryptographisch signiert. Hierzu wird beispielsweise eine Signatur mit einem privaten kryptographischen Schlüssel des Dateneigentümers verwendet. Die Authentizität der Signatur wird beispielsweise mit einem Zertifikat einer PKI nachgewiesen, welches einen dem privaten kryptographischen Schlüssel zugeordneten öffentlichen kryptographischen Signaturprüfschlüssel umfasst. Der Dienstleister erhält den Auftrag und benutzt ihn, um vom Trust Center die benötigten klassenabhängigen privaten Schlüssel zu erhalten. Hierzu sendet der Dienstleister den Auftrag zusammen mit einem Nachweis der eigenen Identität, beispielsweise in Form einer digitalen Signatur zusammen mit einem Zertifikat zur Bestätigung der Signatur, an das Trust Center. Auf den Empfang eines gültigen Auftrags hin übersendet das Trust Center nach Prüfung der Gültigkeit die angefragten klassenabhängigen privaten kryptographischen Schlüssel an den in dem Auftrag identifizierten Dienstleister.
2. Wie 1., nur wird die Liste der benötigten klassenabhängigen privaten kryptographischen Schlüssel vom Dateneigentümer in einem zweiten, gesonderten Auftrag direkt an das Trust Center gesendet, während die restlichen Informationen in einem ersten Auftrag an den Dienstleister gesendet werden. Diese Ausführungsform kann den Vorteil haben, dass der Dienstleister keinerlei Informationen über die verschlüsselten Daten oder die zur Verschlüsslung verwendeten öffentlichen Schlüssel erhält. Der zweite Auftrag ist beispielsweise von dem Dateneigentümer signiert. Ferner kann der zweite Auftrag den Dienstleister identifizieren. Die klassenabhängigen privaten kryptographischen Schlüssel gemäß dem zweiten Auftrag werden beispielsweise auf den Empfang und eine erfolgreiche Gültigkeitsprüfung des zweiten Auftrags hin an den Dienstleister gesendet.
3. Der Dateneigentümer erstellt einen Auftrag ohne darin die zur Auftragserfüllung notwendigen klassenabhängigen privaten kryptographischen Schlüssel zu identifizieren, der Dienstleister bestimmt die zur Ausführung des Auftrags benötigten klassenabhängigen privaten kryptographischen Schlüssel selbst und erfragt diese beim Trust Center. Beispielsweise identifiziert die Anfrage an das Trust Center neben den benötigten klassenabhängigen privaten kryptographischen Schlüsseln den Auftrag und den Dienstleister. Der Dienstleister kann sich beispielsweise durch eine digitale Signatur authentifizieren. Auf einen Empfang einer solchen Anfrage durch einen Dienstleister, erzeugt das Trust Center eine Anfrage an den Dateneigentümer, in welcher es den Dateneigentümer um eine Autorisierung des Dienstleisters zum Empfang der entsprechen klassenabhängigen privaten kryptographischen Schlüssel bittet. Diese Autorisierungsanfrage kann beispielsweise mit einer digitalen Signatur des Trust Centers signiert sein. Bestätigt der Dateneigentümer die Autorisierung, beispielsweise durch eine von ihm signierte Bestätigungsnachricht, so sendet das Trust Center die klassenabhängigen privaten kryptographischen Schlüssel an den Dienstleister.

In allen Fällen erstellt das Computersystem des Trust Centers, d.h. das Key-Providercomputersystem, die klassenabhängigen privaten kryptographischen Schlüssel und übermittelt diese kryptographisch abgesichert an den Dienstleister. Eine kryptographische Absicherung kann beispielsweise durch eine Verschlüsselung mit einem symmetrischen kryptographischen Schlüssel und/oder einem dem Empfänger zugeordneten öffentlichen kryptographischen Schlüssel erfolgen. Nach Ausführungsformen erfolgt eine Übertragung über einen mittels Ende-zu-Ende-Verschlüsselung gesicherte Verbindung.

Nach weiteren Ausführungsformen, spielt es keine Rolle, wer der Dienstleister ist: Der Dateneigentümer erteilt vielmehr einen Auftrag, ohne einen bestimmten Dienstleister zu identifizieren, d.h. irgendein Dritter soll eine Auswertung auf den Daten der Klassen mit den Klassen-IDs A, B, C, ...N machen. Aus den Klassen-IDs A, B, C, ...N ergeben sich direkt alle Informationen, die für die Erstellung der notwendigen klassenabhängigen privaten kryptographischen Schlüssel benötigt werden. Gegebenenfalls umfasst der Auftrag noch weitere Informationen, wie etwa eine Eigentümer-ID des Dateneigentümers und/oder eine Zeitangabe, falls diese zur Berechnung der klassenabhängigen privaten kryptographischen Schlüssel ebenfalls notwendig sind.

Die Authentizität eines entsprechenden Auftrags wird beispielweise durch eine digitale Signatur des Eigentümers mit einem dem Eigentümer zugeordneten privaten kryptographischen Schlüssel und einem zugehörigen Zertifikat mit einem öffentlich kryptographischen Schlüssel zum Prüfen der Signatur nachgewiesen. Durch die Signatur kann belegt werden, dass der Auftrag tatsächlich von dem Dateneigentümer autorisiert und integer ist.

Bei einem Auftrag zum Bereitstellen von klassenabhängigen privaten kryptographischen Schlüsseln kann es sich beispielsweise um einen virtuellen Token mit einer festlegten Gültigkeitsdauer handeln, welcher bei einem Trust Center nur einmal eingelöst werden kann. Nach Ausführungsformen kann es egal sein, wer den Token präsentiert, d.h. was die Identität des Dienstleisters ist.

Nach Ausführungsformen sendet der Dateneigentümer eine Anfrage an das Trust Center und fordert die klassenabhängigen privaten kryptographischen Schlüssel zum Entschlüsseln der Daten an. Die von dem Trust Center erhaltenen klassenabhängigen privaten kryptographischen Schlüssel sendet der Dateneigentümer weiter an den Dienstleister, welcher Daten entschlüsseln und verarbeiten soll. Nach einer weiteren Ausführungsformen handelt es sich bei dem Key-Providercomputersystem mit dem privaten kryptographischen Hauptschlüssel um ein dem Dateneigentümer zugeordnetes Computersystem, welches die zur Entschlüsselung der Daten notwendigen klassenabhängigen privaten kryptographischen Schlüssel selbst berechnet und an den Dienstleister sendet.

Die klassenabhängigen privaten kryptographischen Schlüssel dienen nicht nur zur Entschlüsselung der Daten, vielmehr werden die Daten durch die klassenabhängigen privaten kryptographischen Schlüssel überhaupt erst identifiziert.

Ausführungsformen umfassen ferner ein Nutzercomputersystem zum Verarbeiten einer Datenmenge. Das Nutzercomputersystem umfasst einen Prozessor und einen Speicher mit maschinenlesbaren Instruktionen. Ein Ausführen der maschinenlesbaren Instruktionen durch den Prozessor veranlasst das Nutzercomputersystem zum Zuordnen der Datenmenge zu einer Klasse eines Klassifikationsschemas, welches eine Mehrzahl von Klassen umfasst, zum Versehen der Datenmenge mit Metadaten, wobei die Metadaten eine Klassen-ID einer Mehrzahl von Klassen-IDs umfassen, welche die Klasse des Klassifikationsschemas identifiziert, der die Datenmenge zugeordnet ist, und zum Verschlüsseln zumindest der Datenmenge oder der Metadaten unter Verwendung einer klassenbasierten Verschlüsselung mit einem klassenabhängigen öffentlichen kryptographischen Schlüssel, welcher unter Verwendung der Klassen-ID und eines klassenunabhängigen öffentlichen kryptographischen Hauptschlüssels berechnet ist.

Ausführungsformen umfassen ferner ein Dienstcomputersystem zum Verarbeiten einer mit Metadaten versehenen Datenmenge. Die Datenmenge ist einer Klasse eines Klassifikationsschemas zugeordnet, welches eine Mehrzahl von Klassen umfasst. Die Metadaten umfassen eine Klassen-ID einer Mehrzahl von Klassen-IDs, welche die Klasse des Klassifikationsschemas identifiziert, der die Datenmenge zugeordnet ist. Dle Metadaten sind unter Verwendung einer klassenbasierten Verschlüsselung mit einem klassenabhängigen öffentlichen kryptographischen Schlüssel verschlüsselt. Das Dienstcomputersystem umfasst einen Prozessor und einen Speicher mit maschinenlesbaren Instruktionen umfasst. Ein Ausführen der maschinenlesbaren Instruktionen durch den Prozessor veranlasst das Dienstcomputersystem zum Empfangen eines klassenabhängigen privaten kryptographischen Schlüssels, zum Zugreifen auf die verschlüsselten Metadaten und/oder die verschlüsselte Datenmenge, zum Entschlüsseln der verschlüsselten Metadaten mit dem klassenabhängigen privaten Schlüssel, wobei der klassenabhängige private kryptographische Schlüssel dem klassenabhängigen öffentlichen kryptographischen Schlüssel zugeordnet ist und mit diesem ein asymmetrisches Schlüsselpaar bildet, und zum Verarbeiten der entschlüsselten Metadaten.

Nach Ausführungsformen umfasst das Dienstcomputersystem ferner ein Speichersystem, in welchem die Datenmenge und die zugeordneten Metadaten gespeichert sind. Nach Ausführungsformen sendet das Dienstcomputersystem eine Anfrage nach der Datenmenge und/oder den zugeordneten Metadaten an ein entferntes Speichersystem, in welchem die Datenmenge und die zugeordneten Metadaten gespeichert sind. In Antwort auf die Anfrage empfängt das Dienstcomputersystem die angefragte Datenmenge und/oder die zugeordneten Metadaten. Ausführungsformen umfassen ferner ein Key-Providercomputersystem zum Verwalten eines klassenunabhängigen privaten kryptographischen Hauptschlüssels und Bereitstellen eines klassenabhängigen privaten kryptographischen Schlüssels. Das Key-Providercomputersystem umfasst einen Prozessor und einen Speicher mit maschinenlesbaren Instruktionen. Ein Ausführen der maschinenlesbaren Instruktionen durch den Prozessor veranlasst das Key-Providercomputersystem zum Empfangen einer Anfrage zum Bereitstellen eines klassenabhängigen privaten kryptographischen Schlüssels zum Verarbeiten einer mit Metadaten versehenen Datenmenge, wobei der klassenabhängige private kryptographische Schlüssel von einer Klasse eines Klassifikationsschemas abhängig ist, welcher die Datenmenge zugeordnet ist, wobei das Klassifikationsschema eine Mehrzahl von Klassen umfasst, wobei die Metadaten eine Klassen-ID einer Mehrzahl von Klassen-IDs umfassen, welche die Klasse des Klassifikationsschemas identifiziert, der die Datenmenge zugeordnet ist, wobei zumindest die Datenmenge oder die Metadaten unter Verwendung einer klassenbasierten Verschlüsselung mit einem klassenabhängigen öffentlichen kryptographischen Schlüssel verschlüsselt sind, zum Berechnen des klassenabhängigen privaten kryptographischen Schlüssels unter Verwendung der Klassen-ID und des klassenunabhängigen privaten kryptographischen Hauptschlüssels, und zum Senden des klassenabhängigen privaten kryptographischen Schlüssels in Antwort auf die empfangene Anfrage.

Nach Ausführungsformen identifiziert die Anfrage den durch das Key-Providercomputersystem zu berechnenden klassenabhängigen privaten kryptographischen Schlüssel und/oder einen Empfänger des zu berechnenden klassenabhängigen privaten kryptographischen Schlüssels. Nach Ausführungsformen umfasst die Anfrage die zum Berechnen des klassenabhängigen privaten kryptographischen Schlüssels verwendete Klassen-ID. Nach Ausführungsformen speichert das Key-Providercomputersystem den berechneten klassenabhängigen privaten kryptographischen Schlüssel in einem Speicher. In diesem Fall kann das Key-Providercomputersystem auf weitere Anfragen nach demselben klassenabhängigen privaten kryptographischen Schlüssel hin auf den bereits berechneten Schlüssel zurückgreifen und diesen senden. Nach weiteren Ausführungsformen wird der klassenabhängige private kryptographische Schlüssel auf jede Anfrage hin erneut berechnet und/oder nach dem Senden gelöscht.

Nach Ausführungsformen empfängt das Key-Providercomputersystem die Anfrage zum Bereitstellen des klassenabhängigen privaten kryptographischen Schlüssels von einem Dienstcomputersystem. Die Anfrage umfasst ferner einen Berechtigungsnachweis des Dienstcomputersystems zum Empfang des klassenabhängigen privaten kryptographischen Schlüssels. Das Key-Providercomputersystem prüft den empfangenen Berechtigungsnachweis auf seine Gültigkeit. Das Senden des klassenabhängigen privaten kryptographischen Schlüssels erfolgt auf eine erfolgreiche Prüfung hin an das anfragende Dienstcomputersystem.

Nach Ausführungsformen empfängt das Key-Providercomputersystem die Anfrage zum Bereitstellen des klassenabhängigen privaten kryptographischen Schlüssels von einem Dienstcomputersystem. Die Anfrage identifiziert ein Nutzercomputersystem zum Autorisieren der Bereitstellung des angefragten klassenabhängigen privaten kryptographischen Schlüssels. Das Ausführen der maschinenlesbaren Instruktionen veranlasst das Key-Providercomputersystem ferner zum Senden einer Autorisierungsanfrage zur Autorisierung der Bereitstellung des angefragten klassenabhängigen privaten kryptographischen Schlüssels an das identifizierte Nutzercomputersystem, zum Empfangen einer Autorisierungsbestätigung von dem identifizierten Nutzercomputersystem in Antwort auf die gesendete Autorisierungsanfrage, und zum Prüfen der empfangenen Autorisierungsbestätigung auf ihre Gültigkeit, wobei das Senden des klassenabhängigen privaten kryptographischen Schlüssels auf eine erfolgreiche Prüfung hin an das anfragende Dienstcomputersystem erfolgt.

Nach Ausführungsformen identifiziert die Anfrage oder die Autorisierungsbestätigung den durch das Key-Providercomputersystem zu berechnenden klassenabhängigen privaten kryptographischen Schlüssel.

Nach Ausführungsformen empfängt das Key-Providercomputersystem die Anfrage zum Bereitstellen des klassenabhängigen privaten kryptographischen Schlüssels von einem Nutzercomputersystem. Die Anfrage identifiziert ein Dienstcomputersystem, an welches der angefragte klassenabhängige private kryptographische Schlüssel zu senden ist. Die Anfrage umfasst ferner einen Berechtigungsnachweis des Nutzercomputersystems zum Senden des klassenabhängigen privaten kryptographischen Schlüssels. Das Key-Providercomputersystem prüft den empfangenen Berechtigungsnachweis auf seine Gültigkeit. Das Senden des klassenabhängigen privaten kryptographischen Schlüssels erfolgt auf eine erfolgreiche Prüfung hin an das identifizierte Dienstcomputersystem.

Nach Ausführungsformen veranlasst das Ausführen der maschinenlesbaren Instruktionen das Key-Providercomputersystem ferner veranlasst zum Erzeugen des von dem Key-Providercomputersystem verwalteten klassenunabhängigen privaten kryptographischen Hauptschlüssels zusammen mit einem dem klassenunabhängigen privaten kryptographischen Hauptschlüssel zugeordneten klassenunabhängigen öffentlichen kryptographischen Hauptschlüssel, zum Speichern des klassenunabhängigen privaten kryptographischen Hauptschlüssels in dem Speicher, und zum Senden des klassenunabhängigen öffentlichen kryptographischen Hauptschlüssels an ein Nutzercomputersystem.

Nach Ausführungsformen empfängt das Key-Providercomputersystem eine Anfrage zum Erzeugen des von dem Key-Providercomputersystem verwalteten klassenunabhängigen privaten kryptographischen Hauptschlüssels zusammen mit einem dem klassenunabhängigen privaten kryptographischen Hauptschlüssel zugeordneten klassenunabhängigen öffentlichen kryptographischen Hauptschlüssel. Nach Ausführungsformen empfängt das Key-Providercomputersystem die Anfrage von dem Nutzercomputersystem. Nach Ausführungsformen empfängt das Key-Providercomputersystem die Anfrage von einem anderen Computersystem als dem Nutzercomputersystem. Nach Ausführungsformen ordnet das Key-Providercomputersystem den klassenunabhängigen privaten kryptographischen Hauptschlüssel dem Nutzercomputersystem zu.

Ausführungsformen umfassen eine Kombination aus mehreren oder allen der vorgenannten Computersysteme, d.h. insbesondere Nutzercomputersystem, Dienstcomputersystem, Key-Providercomputersystem, Speicher- bzw. Datenbanksystem und/oder weitere Computersysteme und/oder Sensoren. Eine entsprechende Kombination kann dazu konfiguriert sein ein oder mehrere der vorgenannten Ausführungsformen des Verfahrens auszuführen.

Die Verwendung von Ordinalzahlen wie erstes, zweites, drittes etc. dient hierin, soweit sich aus dem konkreten Zusammenhang nicht eindeutig etwas anderes ergibt, allein der Unterscheidung voneinander verschiedener Elemente und soll keine bestimmte Reihen- oder Rangfolge implizieren.

Im Weiteren werden Ausführungsformen der Erfindung mit Bezugnahme auf die Zeichnungen näher erläutert. Es zeigen:
- Figur 1: eine Ausführungsform einer exemplarischen Anordnung anhand eines schematischen Blockdiagramms,
- Figur 2: eine erste Ausführungsform eines exemplarischen Klassifikationsschemas anhand eines schematischen Blockdiagramms,
- Figur 3: eine zweite Ausführungsform eines exemplarischen Klassifikationsschemas anhand eines schematischen Blockdiagramms,
- Figur 4: eine erste Ausführungsform eines exemplarischen Verfahrens anhand eines schematischen Flussdiagramms,
- Figur 5: eine zweite Ausführungsform eines exemplarischen Verfahrens anhand eines schematischen Flussdiagramms, und
- Figur 6: eine dritte Ausführungsform eines exemplarischen Verfahrens anhand eines schematischen Flussdiagramms,

Elemente der nachfolgenden Ausführungsformen, die einander entsprechen, werden mit denselben Bezugszeichen gekennzeichnet.

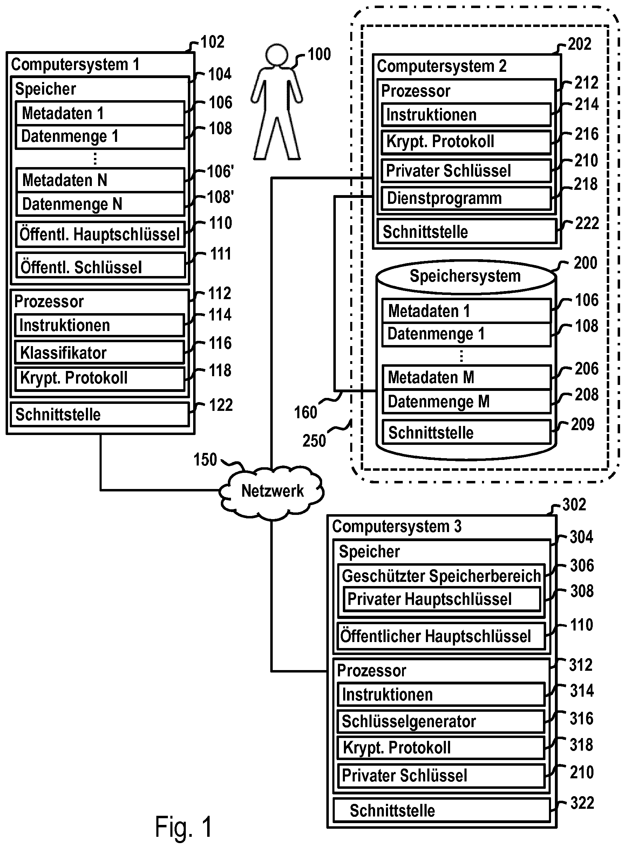

Figur 1 zeigt eine Ausführungsform einer exemplarischen Anordnung zum Verschlüsseln einer Datenmenge. Ein Nutzercomputersystem 102 umfasst einen Speicher 104. In dem Speicher 104 ist eine Mehrzahl von Datenmengen 108, 108' gespeichert. Jeder dieser Datenmengen 108, 108' sind jeweils Metadaten 106, 106' zugeordnet. Beispielsweise bilden die Datenmengen 108, 108' mit den jeweils zugeordneten Metadaten 106, 106' strukturelle Einheiten, beispielsweise in Form einer Datei oder eines Datensatzes mit den Metadaten 106, 106' als Kopfdaten (engl. "header"), die als Zusatzinformationen die Nutzdaten am Anfang eines die Datenmenge 108, 108' umfassenden Datenblocks ergänzen, um die entsprechenden Daten zu charakterisieren. Beispielsweise umfassen die Metadaten 106, 106' eine Klassen-ID einer Klasse, welcher die zugehörigen Datenmenge 108, 108' gemäß einem Klassifikationsschema zugeordnet sind. Die Klassen-ID umfasst beispielsweise die Werte der Klassifikationsparameter, durch welche die Klassen gekennzeichnet ist, der die Datenmenge 108, 108' zugeordnet sind. Ferner umfassen die Metadaten 106, 106' beispielsweise eine Zeitangabe, wie etwa eine Zuordnung zu einem vordefinierten Zeitintervall, in welchem die Datenmenge erstellt wurde und/oder verschlüsselt wird. Zudem können die Metadaten 106, 106' beispielsweise eine Eigentümer-ID des Eigentümers der zugehörigen Datenmengen 108, 108' umfassen.

Darüber hinaus umfasst das Nutzercomputersystem 102 einen Prozessor 112 mit Programminstruktionen 114. Bei Ausführen der Programminstruktionen 114 wird das Nutzercomputersystem 102 durch den Prozessor 112 so gesteuert, dass es die Datenmengen 108, 108' mit den Metadaten 106, 106' verwaltet und diese insbesondere mittels eines klassenabhängigen Klassifikationsschemas klassifiziert. Die Programminstruktionen 114 steuern den Prozessor 112 so, dass er die Datenmengen 108, 108' mittels eines Klassifikators 116, d.h. eines Klassifikationsschemas, klassifiziert. Die Metadaten 106, 106' werden unter Verwendung der Klassifikation erzeugt, insbesondere der Klassen-IDs der Klassen, denen die Datenmengen 108, 108' zugeordnet werden. Ferner ist der Prozessor 112 dazu konfiguriert, ein kryptographisches Protokoll 118 auszuführen, mittels dessen die Datenmengen 108, 108' und die Metadaten 106, 106' verschlüsselt werden. Die Verschlüsselung umfasst eine klassenbasierte Verschlüsselung. Für die klassenbasierte Verschlüsselung berechnet der Prozessor 112 beispielsweise klassenabhängige öffentliche kryptographische Schlüssel unter Verwendung eines klassenunabhängigen öffentlichen kryptographischen Hauptschlüssels 110 und der der zu verschlüsselnden Datenmenge 108, 108' bzw. den Metadaten 106, 106' zugeordneten Klassen-ID. Ferner können zur Berechnung des klassenabhängigen öffentlichen kryptographischen Schlüssels die Eigentümer-ID des Eigentümers der Datenmenge 108, 108' und/oder eine Zeitangabe hinzugezogen werden. Die Zeitangabe identifiziert beispielsweise ein vordefiniertes Zeitintervall, in welches der Zeitpunkt der klassenbasierten Verschlüsselung fällt.

Der resultierende klassenabhängige öffentliche kryptographische Schlüssel gilt somit zur Verschlüsselung aller Daten, welche der entsprechenden Klasse zugeordnet sind und die gegebenenfalls weiteren zur Berechnung verwendeten charakteristischen Merkmale, wie Eigentümer-ID und Zeitangabe, besitzen.

Der resultierende klassenabhängige öffentliche kryptographische Schlüssel kann dazu verwendet werden, die Metadaten 106, 106' und die Datenmenge 108, 108', für welche der entsprechende Schlüssel berechnet wurde, zu verschlüsseln. Nach weiteren Ausführungsformen wird mit dem klassenabhängigen öffentlichen kryptographischen Schlüssel nur die Datenmenge 108, 108' verschlüsselt, während die Metadaten 106, 106' unverschlüsselt bleiben. Nach weiteren Ausführungsformen werden mit dem klassenabhängigen öffentlichen kryptographischen Schlüssel nur die Metadaten 106, 106' verschlüsselt, während die zugehörige Datenmenge 108, 108' mit einem klassenunabhängigen öffentlichen kryptographischen Schlüssel verschlüsselt werden, welcher dem Eigentümer 100 der Daten zugeordnet ist. Hierzu umfasst das Nutzercomputersystem 102 ferner einen in dem Speicher 104 gespeicherten öffentlichen klassenunabhängigen öffentlichen kryptographischen Schlüssel 111 eines dem Eigentümer 100 der Daten zugeordneten asymmetrischen Schlüsselpaars. Den zugehörigen klassenunabhängigen privaten kryptographischen Schlüssel dieses asymmetrischen Schlüsselpaars hat der Eigentümer 100 auf einem von ihm sicher verwahrten Speichersystem gespeichert. Bei diesem Speichersystem handelt es sich beispielsweise um eine Chipkarte, einen Speicherstick oder einen Speicher eines Nutzercomputersystems des Eigentümers 100, wobei der klassenunabhängige private kryptographische Schlüssel in einem geschützten Speicherbereich des entsprechenden Speichers gespeichert ist. Beispielsweise handelt es sich bei dem entsprechenden Nutzercomputersystem des Eigentümers 100 um das gezeigte Nutzercomputersystem 102, wobei der Speicher 104 um einen geschützten Speicherbereich erweitert ist (nicht gezeigt).

Der berechnete klassenabhängige öffentliche kryptographische Schlüssel wird beispielsweise in dem Speicher 104 gespeichert, so dass er für weiteren klassenbasierten Verschlüsselungsvorgänge verwendet werden kann. Beispielsweise kann der gespeicherte Schlüssel zum Verschlüsseln weiterer Daten verwendet werden, die derselben Klassen-ID zugeordnet sind, welche auch zur Berechnung des gespeicherten Schlüssels verwendet wurde. Wurden zur Berechnung des gespeicherten Schlüssels zusätzliche relevante Merkmale, wie etwa Eigentümer-ID und/oder Zeitangabe, verwendet, so kann der gespeicherte Schlüssel zum Verschlüsseln weiterer Daten verwendet werden, falls diese ebenfalls die zusätzlichen relevanten Merkmale aufweisen.

Nach Ausführungsformen kann es sich bei dem Nutzercomputersystem 102 um einen Sensor zum Erfassen der Datenmengen 108, 108' mittels eines Sensormittels (nicht gezeigt) sein. In diesem Fall steuern die Programminstruktionen 114 zudem die Erfassung, d.h. Erzeugung, der Datenmengen 108, 108'. Somit können die Datenmengen 108, 108 direkt bei ihrer Erzeugung verschlüsselt werden.

Die Datenmengen 108, 108' und Metadaten 106, 106' werden in dem Speicher 104 beispielsweise nur zwischengespeichert. In diesem Fall handelt es sich bei dem Speicher 104 beispielsweise um einen flüchtigen Speicher. Handelt es sich bei dem Speicher 104 um einen flüchtigen Speicher, so sind der klassenunabhängige öffentliche kryptographische Hauptschlüssel 110 sowie gegebenenfalls der klassenabhängige öffentliche kryptographische Hauptschlüssel 111 in einem nichtflüchtigen Speicher des Nutzercomputersystems 102 gespeichert.

Das Nutzercomputersystem 102 umfasst schließlich eine Kommunikationsschnittstelle 122 zur Kommunikation über das Netzwerk 150 mit dem Speichersystem 200 bzw. der Kommunikationsschnittstelle 222 eines Dienstcomputersystems 202. Bei dem Netzwerk 150 kann es sich beispielsweise um das Internet handeln. Über die Kommunikationsschnittstelle 122 sendet das Nutzercomputersystem 102 die verschlüsselten Datenmengen 108, 108' zusammen mit den zugehörigen Metadaten 106, 106' an das Speichersystem 200, wo diese gespeichert und aufbewahrt werden. Ferner ist das Nutzercomputersystem 102 dazu konfiguriert, über die Kommunikationsschnittstelle 122 und das Netzwerk 150 mit der Kommunikationsschnittstelle 322 eines Key-Providercomputersystems 302 zu kommunizieren. Über die Kommunikationsschnittstelle 122 empfängt das Nutzercomputersystem 102 beispielsweise auf eine entsprechend Anfrage den klassenunabhängigen öffentlichen kryptographischen Hauptschlüssel 110 von dem Key-Providercomputersystem 302. Nach weiteren Ausführungsformen erhält das Nutzercomputersystem 102 den klassenunabhängigen öffentlichen kryptographischen Hauptschlüssel 110 von einem weiteren Computersystem des Dateneigentümers 100, welches den entsprechenden klassenunabhängigen öffentlichen kryptographischen Hauptschlüssel 110 zuvor von dem Key-Providercomputersystem 302 erhalten hat. Nach Ausführungsformen handelt es sich bei dem Key-Providercomputersystem 302 um ein Computersystem des Dateneigentümers 100.

In dem Speichersystem 200 sind verschlüsselte Datenmengen 108, 208 zusammen mit zugehörigen Metadaten 106, 206 gespeichert. Je nach Ausführungsform sind die Metadaten 106, 206 ebenfalls verschlüsselt oder bleiben unverschlüsselt. Datenmenge 108 und Metadaten 106 wurden beispielsweise von dem Nutzercomputersystem 102 in verschlüsselter Form an das Speichersystem 200 gesendet. Ferner umfasst das Speichersystem 200 weitere Datenmengen 208 mit zugehörigen Metadaten 206 in verschlüsselter oder unverschlüsselter Form. Diese weiteren Datenmengen 208 wurden beispielsweise von anderen Computersystemen an das Speichersystem 200 gesendet und gehören beispielsweise einem anderen Eigentümer. Bei dem Speichersystem 200 handelt es sich beispielsweise um ein Speichersystem eines Datenhosting-Anbieters, welcher Speicherplatz zum Speichern von Daten als laaS anbietet.

In der gezeigten Ausführungsform weist das Speichersystem 200 ferner eine Kommunikationsschnittstelle 209 auf, über welche es mit dem Dienstcomputersystem 202 verbunden ist. Das Speichersystem 200 kann in diesem Fall als ein Teilsystem des Dienstcomputersystems 202 betrachtet werden, da die Kommunikation mit dem Netzwerk 150 über das Dienstcomputersystem 202 erfolgt. Nach alternativen Ausführungsformen ist das Speichersystem 200 unabhängig von dem Dienstcomputersystem 202 über die Kommunikationsschnittstelle 209 mit dem Netzwerk 150 verbunden. Die Kommunikationsverbindung mit dem Dienstcomputersystem 202 kann in letzterem Fall beispielsweise über das Netzwerk 150 oder ein anderes Netzwerk hergestellt werden, wie etwa ein zusätzliches Intranet.

Das Dienstcomputersystem 202 ist ein einem Dienstleister zugeordnetes Computersystem, welches Dienstleistungen wie etwa Datenverarbeitung, insbesondere Datenanalysen, über das Netzwerk 150 anbietet. Das Dienstcomputersystem 202 ebenso wie das Speichersystem 200 können Teil einer Cloud-Umgebung 250 sein, welche von dem Nutzercomputersystem 102 zum Speichern und Verarbeiten, insbesondere Analysieren, von Daten verwendet wird. Bei der Cloud-Umgebung 250 handelt es sich beispielsweise um eine Public-Cloud, welche einer breiten Öffentlichkeit, d.h. einer Mehrzahl beliebiger Computersysteme, Zugang zu abstrahierten IT-Infrastrukturen über das Internet bietet. Anbieter von Public-Cloud-Diensten, wie etwa die Anbieter des Dienstcomputersystems 202 und des Speichersystems 200, erlauben es ihren Kunden, wie etwa dem Dateneigentümer 100, IT-Infrastruktur und Dienstleistungen auf einer flexiblen Bezahlbasis in Abhängigkeit von dem tatsächlichen Nutzungsgrad (engl. "pay-as-you-go") zu mieten, ohne Kapital in Rechner- und Datenzentrumsinfrastruktur investieren zu müssen. Insbesondere bieten Anbieter von Public-Cloud-Diensten IT-Infrastruktur an, welche zur Handhabung großer Datenvolumen, d.h. von Big Data, konfiguriert sind. Die Cloud-Umgebung 250 umfasst eine große Mehrzahl weiterer Computer- und Speichersysteme.

Das Dienstcomputersystem 202 umfasst einen Prozessor 212, welcher zur Ausführung von Programminstruktionen 214 konfiguriert ist. Durch ein Ausführen der Programminstruktionen 214 wird beispielsweise die Kommunikation mit dem Nutzercomputersystem 102 über eine Kommunikationsschnittstelle 222 des Dienstcomputersystems 202 und das Netzwerk 150 gesteuert. Ferner können die Programminstruktionen 214 den Zugriff auf das Speichersystem 200 steuern. Das Dienstcomputersystem 202 umfasst ein Dienstprogramm 218, welches beispielsweise zum Ausführen von Datenanalysen konfiguriert ist. Beispielsweise führt das Dienstprogramm 218 auf eine Anfrage des Dateneigentümers 100 hin eine Analyse der in dem Speichersystem gespeicherten Metadaten 106 von Datenmengen 108 des Dateneigentümers 100 durch. Damit das Dienstprogramm 218 die Metadaten 106 analysieren kann, werden diese über die Kommunikationsverbindung 160 durch das Dienstcomputersystem 202 aus dem Speichersystem 200 ausgelesen. Ferner werden die Metadaten 106, falls sie klassenabhängig verschlüsselt sind, durch Ausführen eines kryptographischen Protokolls 216 unter Verwendung eines klassenabhängigen privaten kryptographischen Schlüssels 210 entschlüsselt.

Die Ergebnisse der Analyse werden über das Netzwerk 150 an den Dateneigentümer 100 gesendet, beispielsweise an das Nutzercomputersystem 102. Die Übertragung der Ergebnisse erfolgt beispielsweise über eine kryptographisch abgesicherte Verbindung. Eine kryptographische Absicherung kann beispielsweise durch eine Verschlüsselung mit einem symmetrischen kryptographischen Schlüssel und/oder einem dem Empfänger zugeordneten öffentlichen kryptographischen Schlüssel erfolgen. Nach Ausführungsformen erfolgt eine Übertragung über eine mittels Ende-zu-Ende-Verschlüsselung gesicherte Verbindung. Zudem kann die kryptographische Absicherung eine Authentifizierung des Empfängers der Analyseergebnisse umfassen. Hierzu sendet beispielsweise das Dienstcomputersystem 202 eine Zufallszahl an den Empfänger, wie etwa das Nutzercomputersystem 102. Der Empfänger verschlüsselt die Zufallszahl mit einem privaten kryptographischen Schlüssel eines asymmetrischen Schlüsselpaars, welches dem Empfänger zugeordnet ist, und die verschlüsselte Zufallszahl zurück an das Dienstcomputersystem 202. Das Dienstcomputersystem 202 kann die verschlüsselte Zufallszahl mittels eines öffentlichen kryptographischen Schlüssels des dem Empfänger zugeordneten asymmetrischen Schlüsselpaars entschlüsseln. Ist die resultierende Zufallszahl identisch mit der zuvor gesendeten Zufallszahl, so verfügt der Empfänger über den privaten kryptographischen Schlüssel des dem Empfänger zugeordneten asymmetrischen Schlüsselpaars. Die Zuordnung des asymmetrischen Schlüsselpaars kann beispielsweise mittels eines Zertifikats nachgewiesen werden, welches beispielsweise Teil einer PKI ist und dem Dienstcomputersystem zusammen mit dem öffentlichen kryptographischen Schlüssel des dem Empfänger zugeordneten asymmetrischen Schlüsselpaars zur Verfügung gestellt wird. Beispielswiese umfasst das Zertifikat den entsprechenden öffentlichen kryptographischen Schlüssel.

Der klassenabhängige private kryptographische Schlüssel 210 wird dem Dienstcomputersystem 202 von einem Key-Providercomputersystem 302 zur Verfügung gestellt. Das Verwaltungscomputersystem 302 verwaltet das klassenunabhängige asymmetrische Hauptschlüsselpaar, welches den klassenunabhängigen öffentlichen kryptographischen Hauptschlüssel 110 und einen klassenunabhängigen privaten kryptographischen Hauptschlüssel 308 umfasst. Aus diesem klassenunabhängigen asymmetrischen Hauptschlüsselpaar werden die klassenabhängigen asymmetrischen Schlüsselpaare, wie etwa der klassenabhängige öffentliche kryptographische Schlüssel 111 und der klassenabhängige private kryptographische Schlüssel 210, abgeleitet. Bei dem Key-Providercomputersystem 302 handelt es sich beispielsweise um ein Computersystem eines Trust Centers, welches in einer kryptographisch, elektronisch und/oder mechanisch gesicherten Umgebung, betrieben wird. Nach weiteren Ausführungsformen handelt es sich bei dem Key-Providercomputersystem 302 beispielsweise um ein dem Dateneigentümer 100 zugeordnetes Computersystem. Beispielsweise sind das Key-Providercomputersystem 302 und das Nutzercomputersystem 102 identisch, d.h. das Nutzercomputersystem 102 zudem den klassenunabhängigen privaten kryptographischen Hauptschlüssel 308. Die Übertragung des klassenabhängigen privaten kryptographischen Schlüssels 210 erfolgt beispielsweise über eine kryptographisch abgesicherte Verbindung. Eine kryptographische Absicherung kann beispielsweise durch eine Verschlüsselung mit einem symmetrischen kryptographischen Schlüssel und/oder einem dem Empfänger zugeordneten öffentlichen kryptographischen Schlüssel erfolgen. Nach Ausführungsformen erfolgt eine Übertragung über eine mittels Ende-zu-Ende-Verschlüsselung gesicherte Verbindung. Zudem kann die kryptographische Absicherung eine Authentifizierung des Empfängers des klassenabhängigen privaten kryptographischen Schlüssels 210, d.h. des Key-Providercomputersystems 302 umfassen. Eine solche Authentifizierung kann beispielsweise analog zu dem zuvor im Kontext der Übertragung der Analyseergebnisse beschriebenen Authentifizierungsverfahren implementiert werden.

Das Key-Providercomputersystem 302 umfasst eine Kommunikationsschnittstelle 322 zur Kommunikation mit dem Nutzercomputersystem 102 und dem Dienstcomputersystem 202 über das Netzwerk 150. Über diese Kommunikationsverbindungen werden der klassenunabhängige öffentliche kryptographische Hauptschlüssel 110 und ein oder mehrere klassenabhängige private kryptographische Schlüssel 210 zum Entschlüsseln von Datenmengen 108 bzw. Metadaten bestimmter Klassen eines Klassifikationsschemas 116. Ferner umfasst das Key-Providercomputersystem 302 einen Speicher 304, welcher den klassenunabhängigen öffentlichen kryptographischen Hauptschlüssel 110 und einen geschützten Speicherbereich 306 umfasst. In dem geschützten Speicherbereich 306 ist der dem klassenunabhängigen öffentlichen kryptographischen Hauptschlüssel 110 zugeordnete klassenunabhängige private kryptographische Hauptschlüssel 308 gespeichert.

Das Key-Providercomputersystem 302 umfasst zudem einen Prozessor 312, welcher Programminstruktionen 314 ausführt. Durch das Ausführen der Programminstruktionen 314 steuert der Prozessor die Verwaltung des asymmetrischen Hauptschlüsselpaars sowie die Verteilung daraus abgeleiteter klassenabhängiger privater kryptographischer Schlüssel 210 und des klassenunabhängigen öffentlichen kryptographischen Hauptschlüssel 110. Das Key-Providercomputersystem 302 umfasst einen Schlüsselgenerator 316 zum Erzeugen klassenunabhängiger asymmetrischer Hauptschlüsselpaare, wie etwa den klassenunabhängigen öffentlichen kryptographischen Hauptschlüssel 110 und den klassenunabhängigen privaten kryptographischen Hauptschlüssel 308. Ferner wird durch die Programminstruktionen 314 ein kryptographisches Protokoll gesteuert, durch dessen Ausführung der klassenabhängige private kryptographische Schlüssel 210 berechnet unter Verwendung des klassenunabhängigen privaten kryptographischen Hauptschlüssels 308 und der Klassen-ID der Klasse berechnet, welcher die zu verschlüsselnden Daten zugeordnet sind, sowie gegebenenfalls weiterer charakteristischen Merkmale, wie Eigentümer-ID und Zeitangabe.

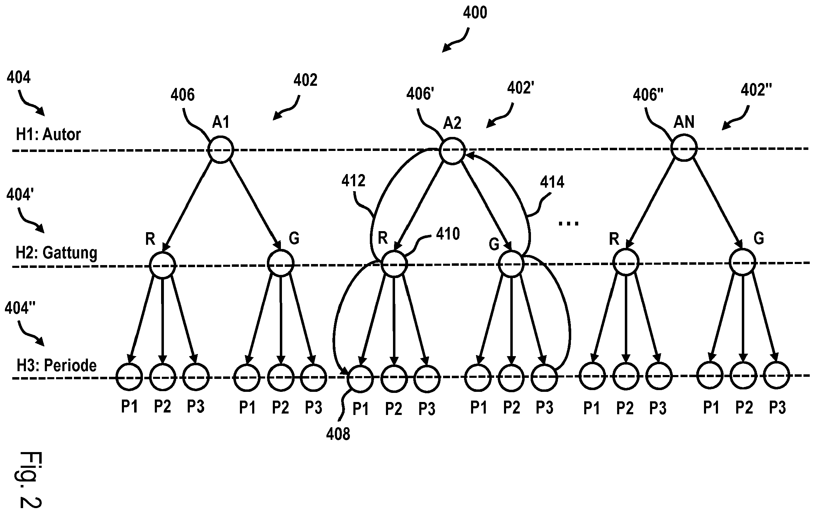

Figur 2 zeigt eine erste Ausführungsform eines exemplarischen Klassifikationsschemas, wie etwa dem Klassifikator 116 aus Figur 1. Das Klassifikationsschema weist eine monohierarchische Klassifikationsstruktur 400 auf, welche einen Wald mit einer Mehrzahl von gewurzelten Bäumen 402, 402', 402" in Form von Out-Trees aufweist. Die Klassifikationsstruktur 400 umfasst drei Hierarchieebenen 404, 404', 404", welche jeweils einem Klassifikationsparameter zugeordnet sind.

Beispielsweise handelt es sich bei Klassifikationsstruktur 400 um eine Klassifikationsstruktur zum Klassifizieren von literarischen Werken anhand des Namens des Autors des jeweiligen Werks, der literarischen Gattungsart des Werks sowie Zeitperiode, in der es entstanden ist. Im dargestellten Beispiel sind die Hierarchieebenen H1, H2, H3 den Klassifikationsparametern "Autor", "Gattung" und "Zeitperiode" zugeordnet. Beispielsweise sollen literarische Werke von N Autoren A1, A2, ..., AN klassifiziert werden. Ferner wird identifiziert, ob es sich bei den Werken um Romane oder Gedichte handelt und ob diese in einer von vier Zeitperioden P1, P2, P3, entstanden sind. Alle entsprechenden Werke des Autors A1 werden der Klasse A1 der Hierarchieebene H1 zugeordnet, welche die Wurzel des Baumgraphen bildet. Handelt es sich bei den Werken ferner um einen Roman oder ein Gedicht werden diese weiter den entsprechenden Klassen R und G der zweiten Hierarchieebene zugeordnet. Fällt die Entstehung der Werke schließlich in eine der Zeitperioden P1, P2, P3, werden diese entsprechenden Klassen der dritten Hierarchieebene zugeordnet.

Der erste Baum 404 umfasst somit als Wurzel 406 eine Klasse der Hierarchieebene H1, welcher der Parameterwert A1 zugeordnet ist und deren Klassen-ID "A1". Die Klasse A1 umfasst alle klassifizierten Werke des Autors A1. Als Unterklassen auf der Hierarchieebene H2 umfasst die Klasse A1 eine Klasse mit der Klassen-ID "A1.R", welcher der Parameterwert R zugeordnet ist und alle klassifizierten Werke des Autors A1 umfasst, bei denen es sich um einen Roman handelt. Als weitere Unterklassen auf der Hierarchieebene H2 umfasst die Klasse A1 eine Klasse mit der Klassen-ID "A1.G", welcher der Parameterwert G zugeordnet ist und alle klassifizierten Werke des Autors A1 umfasst, bei denen es sich um ein Gedicht handelt. Als Unterklassen auf der Hierarchieebene H3 umfasst die Klasse A1.R drei Klassen mit den Klassen-IDs "A1.R.P1", "A1.R.P2" und "A1.R.P3", welche den Parameterwerten P1, P2 bzw. P3 zugeordnet sind und alle klassifizierten Werke des Autors A1 umfasst, bei denen es sich um einen Roman handelt, welcher in der Zeitperiode P1, P2 bzw. P3 verfasst wurde. Ferner umfasst auch die Klasse A1.G als Unterklassen auf der Hierarchieebene H3 drei Klassen mit den Klassen-IDs "A1.G.P1", "A1.G.P2" und "A1.G.P3", welche den Parameterwerten P1, P2 bzw. P3 zugeordnet sind und alle klassifizierten Werke des Autors A1 umfasst, bei denen es sich um ein Gedicht handelt, welches in der Zeitperiode P1, P2 bzw. P3 verfasst wurde.

Die Klassen-IDs werden in den zuvor genannten Beispielen wie folgt zugeordnet: Die Klassen-ID einer Klasse entspricht der Kombination der Klassifikationsparameterwerte aller Klassen entlang eines Pfads von der Wurzel zu der entsprechenden zu identifizierenden Klasse. Beispielsweise umfasst der Pfad 412 von der Wurzel 406' des zweiten Baums 402' zu dem Blatt 408 die Klasse 406' mit Klassifikationsparameterwert "A2", die interne Klasse 410, welche eine Unterklasse der Klasse 406' mit dem Klassifikationsparameterwert "R" ist, sowie die Klasse 408 mit Klassifikationsparameterwert "P1". Daher ist die Klassen-ID der Klasse 408 "A2.R.P1".

Die Metadaten einer der Klasse 408 "A2.R.P1" zugeordneten Datenmenge umfasst beispielsweise die Klassen-ID "A2.R.P1". Nach Ausführungsformen wird ein klassenabhängiger öffentlicher kryptographischer Schlüssel zum Verschlüsseln der Metadaten unter Verwendung der Klassen-ID "A2.R.P1" berechnet. Nach weiteren Ausführungsformen umfassen die Metadaten die Klassen-ID in Form der einzelnen Klassifikationsparameterwerte, aus denen sich die Klassen-ID zusammensetzt, d.h. "A2", "R" und "P1". Unter Verwendung der Klassen-ID, d.h. "A2", "R" und "P1", wird eine Mehrzahl klassenabhängiger öffentlicher kryptographischer Schlüssel zum Verschlüsseln der Metadaten berechnet. Ein erster klassenabhängiger öffentlicher kryptographischer Schlüssel wird unter Verwendung des Klassifikationsparameterwerts "A2", ein zweiter klassenabhängiger öffentlicher kryptographischer Schlüssel unter Verwendung des Klassifikationsparameterwerts "R" und ein dritter klassenabhängiger öffentlicher kryptographischer Schlüssel unter Verwendung des Klassifikationsparameterwerts "P1" berechnet. Beim Verschlüsseln der Metadaten wird der Klassifikationsparameterwert "A2" mit dem ersten klassenabhängigen öffentlichen kryptographischen Schlüssel verschlüsselt, der Klassifikationsparameterwert "R" mit dem zweiten klassenabhängigen öffentlichen kryptographischen Schlüssel und der Klassifikationsparameterwert "P1" mit dem dritten klassenabhängigen öffentlichen kryptographischen Schlüssel.

Nach weiteren Ausführungsformen wird die Mehrzahl klassenabhängiger öffentlicher kryptographischer Schlüssel wie im voranstehenden Beispiel berechnet, wobei die resultierenden kryptographischen Schlüssel beim Verschlüsseln jedoch gemäß einer hierarchischen Ordnung verwendet werden: Die Klassifikationsparameterwerte "A2", "R" und "P1" werden dem Pfad 412 umgekehrt von dem Blatt 408 über die interne Klasse 410 bis zu der Wurzel 406' folgend verschlüsselt. Dabei wird der Klassifikationsparameterwert "P1" der untersten Hierarchieebene H3 in einer ersten Verschlüsslung mit dem dritten klassenabhängigen öffentlichen kryptographischen Schlüssel verschlüsselt, das Resultat der ersten Verschlüsselung wird mit dem Klassifikationsparameterwert "R" der nächsthöheren Hierarchieebene H2 kombiniert und die daraus resultierende Kombination mit dem zweiten klassenabhängigen öffentlichen kryptographischen Schlüssel verschlüsselt. Das Resultat der zweiten Verschlüsselung wird schließlich mit dem Klassifikationsparameterwert "A2" der höchsten Hierarchieebene H1 kombiniert und die daraus resultierende Kombination wird mit dem ersten klassenabhängigen öffentlichen kryptographischen Schlüssel verschlüsselt. Solche Verschlüsselungen mit einer Mehrzahl klassenabhängiger öffentlicher kryptographischer Schlüssel können den Vorteil haben, dass individuelle Bestandteile der Metadaten selektiv entschlüsselt werden können, bzw. dass Kombinationen von Bestandteilen der Metadaten, welche Klassen-IDs höherer Hierarchieebenen entsprechen und von denen die vorliegende Klasse eine Unterklasse ist, selektiv entschlüsselt werden können. Weiterhin kann eine verschachtelte Verschlüsselung den zusätzlichen Vorteil haben, dass das aus der Verschlüsselung resultierende Chiffrat kürzer ist als das resultierende Chiffrat im Falle der zuvor beschriebenen Verschlüsselung mit mehreren klassenabhängigen öffentlichen kryptographischen Schlüsseln, mit welchen jeweils ein individueller Klassifikationsparameterwert verschlüsselt wird. In letzterem Fall entspricht das am Ende resultierende Chiffrat einer Zusammenstellung der Chiffrate der einzelnen Klassifikationsparameterwerte. Ein Pfad 414 mit umgekehrter Ausrichtung ist beispielhaft für die Klasse "A2.G.P3" eingezeichnet.

Ein Gedicht des Autors A1 aus der Zeitperiode P1 wird also der Klasse A1.G.P1 zugeordnet, während ein undatiertes Gedicht des Autors A1 der Klasse A1.G zugeordnet wird. Aufgrund der hier vordefinierten Klassifikationsstruktur 400 wird eine Kurzgeschichte des Autors A1 aus der Zeitperiode P1 der Klasse A1 zugeordnet. Werke des Autors A1 aus der Zeitperiode P1, welcher keiner literarischen Gattung zugeordnet sind, werden der Klasse A1 zugeordnet. Alternativ könnte die Klassifikationsstruktur 400 auch so abgeändert werden, dass sie Klassen der Form "A1.P1" umfasst, falls beispielsweise ein oder mehrere Werke des Autors A1 aus der Zeitperiode P1 vorliegen, welche keiner literarischen Gattung zugeordnet sind.

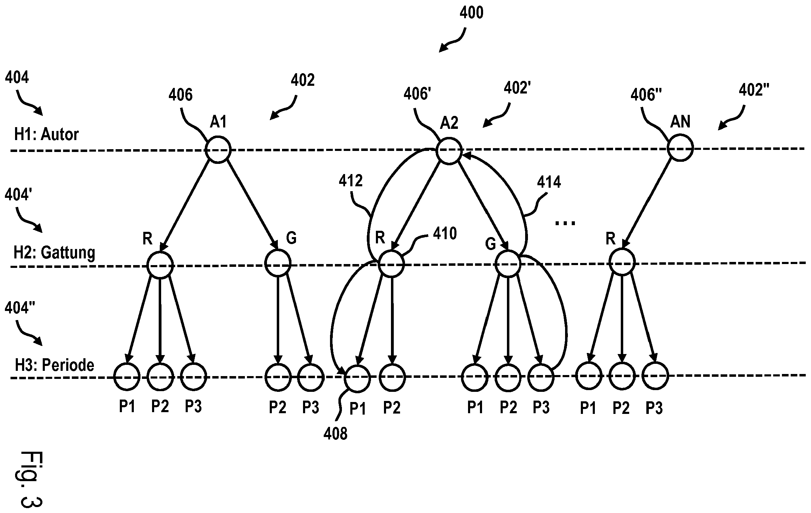

Figur 3 zeigt eine zweite Ausführungsform eines exemplarischen Klassifikationsschemas mit einer Klassifikationsstruktur 400, welches dynamisch generiert wird, beispielsweise unter Verwendung von maschinellem Lernen. Im Unterschied zu der ersten Ausführungsform aus Figur 2 werden in der Ausführungsform gemäß Figur 3 Klassen nur definiert, wenn diese nicht leer sind. Liegt kein Gedicht des Autors A1 aus der Zeitperiode P1 vor, so umfasst die Klassifikationsstruktur 400 auch keine entsprechende Klasse. Bei einer solchen dynamischen Erzeugung der Klassifikationsstruktur 400 könnten auch Klassen der Form "A1.P1" erzeugt werden, falls beispielsweise ein oder mehrere Werke des Autors A1 betrachtet werden, welche keiner literarischen Gattung zugeordnet sind.

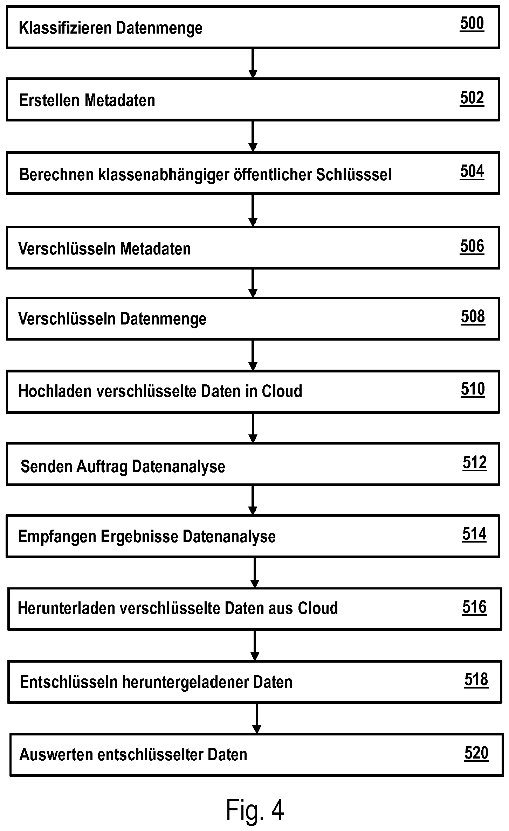

Figur 4 zeigt eine erste Ausführungsform eines exemplarischen Verfahrens anhand eines schematischen Flussdiagramms. In Block 500 wird eine Datenmenge klassifiziert, d.h. einer Klasse eines Klassifikationsschemas zugeordnet. Die Zuordnung erfolgt beispielsweise unter Verwendung von Klassifikationsparametern, wobei für die Datenmenge eine Kombination aus ein oder mehreren Klassifikationsparameterwerten, welche einer der Klassen eindeutig zugeordnet ist, bestimmt wird. Nach Ausführungsformen wird eine Mehrzahl von Datenmengen klassifiziert. Bei den Datenmengen kann es sich beispielsweise um eine eigenständige Sammlung von Daten handeln, wie beispielsweise einen vollständigen Satz von Messdaten. Beispielsweise kann es sich bei den Datenmengen um Abschnitte eines Texts oder einen vollständigen Text, wie etwa einen Aufsatz, einen wissenschaftlichen Fachartikel, ein Dokument, eine Studie, eine Zeitschrift, ein Buch, etc., handeln. Ferner kann es sich bei den Datenmengen um abhängige Datenmengen handeln, welche Teil einer zusammengehörigen Gruppe sind. Nach Ausführungsformen umfasst das Klassifizieren ferner ein Unterteilen einer Gruppe von Datenmengen in einzelne Datenmengen, welche jeweils einer Klasse des Klassifikationsschemas zugeordnet werden. Beispielsweise handelt es sich bei der Gruppe von Datenmengen um einen zusammengehörigen Satz von Messdaten oder einen zusammengehörigen Text bzw. eine zusammengehörige Textsammlung, wie etwa einen Aufsatz, einen wissenschaftlichen Fachartikel, ein Dokument, eine Studie, eine Zeitschrift, ein Buch, etc. Diese werden beispielsweise satz-, absatz-, paragraphen-, artikel-, kapitelweise unterteilt und jeder einzelne Satz, Absatz, Paragraph, Artikel oder Kapitel einer Klasse des Klassifikationsschemas zugeordnet.

Bei einem die Klassifikation ausführenden Computersystem, z.B. einem Nutzercomputersystem, kann es sich beispielsweise um ein Computersystem handeln, auf welchem die Daten erzeugt, wie etwa ein Sensor im Fall von Messdaten oder ein Computersystem mit Textverarbeitungsprogrammen, oder auf welchem die Daten zusammengestellt werden.

In Block 502 werden jeweils Metadaten zu den Datenmengen erstellt, welche eine Klassen-ID umfassen, die die erste Klasse identifiziert, welcher die jeweilige Datenmenge zugeordnet wurde. Die Klassen-ID umfasst beispielsweise die Klassifikationsparameterwerte gemäß denen die Zuordnung zu der entsprechenden Klasse erfolgt ist. Ferner kann die Klassen-ID in Form eines einzigen Werts, bei welchem es sich beispielsweise um eine Kombination von Einzelwerten, wie etwa eine Aneinanderreihung, handelt, oder als ein Datensatz implementiert sein, welcher die einzelnen Klassifikationsparameterwerte umfasst, die die Klassen-ID bilden. Falls die Datenmengen bereits mit Metadaten versehen sind, werden diese gegebenenfalls entsprechend ergänzt.

In Block 504 wird unter Verwendung der Klassen-ID und eines klassenunabhängigen öffentlichen kryptographischen Hauptschlüssels ein klassenabhängiger öffentlicher kryptographischer Schlüssel bzw. im Falle einer Mehrzahl von zu verschlüsselnden Datenmengen, welche unterschiedlichen Klassen zugeordnet sind, eine Mehrzahl klassenabhängiger öffentlicher kryptographischer Schlüssel berechnet. Die Berechnung des oder der klassenabhängigen öffentlichen kryptographischen Schlüssel erfolgt beispielsweise durch das Computersystem, welches auch die Klassifikation durchführt. Nach weiteren Ausführungsformen werden dem Nutzercomputersystem der oder die klassenabhängigen öffentlichen kryptographischen Schlüssel von einem anderen Computersystem, d.h. Key-Providercomputersystem, bereitgestellt. Letzteres kann etwa der Fall sein, wenn die Verschlüsselung durch einen Sensor ausgeführt wird, welchem das Klassifikationsschema durch ein Computersystem des Eigentümers der von dem Sensor erfassten Messdaten zusammen mit klassenabhängigen öffentlichen kryptographischen Schlüsseln für die Klassen des Klassifikationsschemas bereitgestellt wird.

Nach Ausführungsformen wird für eine Klassen-ID genau ein klassenabhängiger öffentlicher kryptographischer Schlüssel berechnet. Nach Ausführungsformen kann die Klassen-ID eine Mehrzahl von Klassifikationsparameterwerten umfassen, wobei für jeden Klassifikationsparameterwert ein klassenabhängiger öffentlicher kryptographischer Schlüssel berechnet wird. In letzterem Fall wird für die Berechnung beispielsweise lediglich ein Teil der Klassen-ID verwendet, d.h. der entsprechende Klassifikationsparameterwert. Zur Berechnung des oder der klassenabhängigen öffentlichen kryptographischen Schlüssel können ferner eine oder mehrere Eigentümer-IDs des bzw. der Eigentümer der zu verschlüsselnden Daten sowie eine Zeitangabe verwendet werden. Die Zeitangabe identifiziert beispielsweise einen Zeitraum und/oder Zeitpunkt der Erzeugung der zu verschlüsselnden Daten. Dies kann insbesondere im Fall von Messdaten vorteilhaft sein. Ebenso kann die Zeitangabe beispielsweise einen Zeitraum und/oder Zeitpunkt der Verschlüsselung der Daten identifizieren.

In Block 506 werden die Metadaten mit dem bzw. den klassenabhängigen öffentlichen kryptographischen Schlüsseln verschlüsselt. Hierbei können die Metadaten bzw. die Klassen-ID insgesamt mit einem klassenabhängigen öffentlichen kryptographischen Schlüssel verschlüsselt werden. Nach weiteren Ausführungsformen wird eine Mehrzahl von klassenabhängigen öffentlichen kryptographischen Schlüsseln zur Verschlüsselung verwendet, wobei jeder der klassenabhängigen öffentlichen kryptographischen Schlüssel unter Verwendung einer der Klassifikationsparameterwerte der Klassen-ID gemäß Metadaten der zu verschlüsselnden Datenmenge berechnet sind. Die von den Metadaten bzw. von der Klassen-ID umfassten Klassifikationsparameterwerte können dabei jeweils mit dem Klassifikationsparameterwert verschlüsselt werden, zu dessen Berechnung der entsprechende Klassifikationsparameterwert verwendet wurde. Nach weiteren Ausführungsformen erfolgt die Verschlüsselung der Klassifikationspaarmeterwerte in einer verschachtelten Form. Beispielsweise erfolgt die Klassifikation unter Verwendung eines Klassifikationsschemas mit einer hierarchischen, insbesondere einer monohierarchischen Klassifikationsstruktur, wobei jeder Hierarchieebene zumindest ein Klassifikationsparameter zugeordnet ist. Im Zuge der Verschachtelung wird beispielsweise auf der untersten Hierarchieebene begonnen, auf der sich die Klasse befindet, welcher die Datenmenge mit den zu verschlüsselnden Metadaten zugeordnet ist. Der Klassifikationsparameterwert für den Klassifikationsparameter der untersten Hierarchieebene wird mit dem zuggehörigen klassenabhängigen öffentlichen kryptographischen Schlüssel verschlüsselt. Das resultierende Chiffrat wird mit dem Klassifikationsparameterwert der Klassen-ID kombiniert, welcher einem Klassifikationsparameter der nächsthöheren Hierarchieebene zugeordnet ist. Diese Kombination wird mit dem zuggehörigen klassenabhängigen öffentlichen kryptographischen Schlüssel des hinzugefügten Klassifikationsparameterwerts verschlüsselt. Dieses verschachtelte Verschlüsselungsschema wird bis zum Erreichen der höchsten Hierarchieebene fortgesetzt.

Nach alternativen Ausführungsformen können die Metadaten unverschlüsselt bleiben.

In Block 508 wird zudem die Datenmenge verschlüsselt. Die Datenmenge wird beispielsweise mit einem klassenunabhängigen öffentlichen kryptographischen Schlüssel eines asymmetrischen Schlüsselpaars verschlüsselt, welches dem Dateneigentümer zugeordnet ist. Somit kann sichergestellt werden, dass allein der Dateneigentümer mit seinem entsprechenden klassenabhängigen privaten kryptographischen Schlüssel die versschlüsselte Datenmenge entschlüsseln kann. Nach weiteren Ausführungsformen wird die Datenmenge beispielsweise mit demselben klassenabhängigen öffentlichen kryptographischen Schlüssel verschlüsselt werden, wie die zugehörigen Metadaten. In Block 510 werden die Daten, d.h. die verschlüsselte Datenmenge und die verschlüsselten oder unverschlüsselten Metadaten, in die Cloud hochgeladen, d.h. über ein Netzwerk wie etwa das Internet an ein Speichersystem gesendet und dort gespeichert.

Sollen die in der Cloud gespeicherten Datenmengen bzw. Metadaten analysiert werden, so wird in Block 512 ein Auftrag zu einer entsprechenden Datenanalyse an ein oder mehrere Dienstcomputersysteme gesendet, welche entsprechende Analysedienstleistungen anbieten. Beispielsweise sendet ein Nutzercomputersystem des Dateninhabers den Analyseauftrag. Um eine Analyse der Daten durch das beauftragte Dienstcomputersystem zu ermöglichen, kann der Auftrag beispielsweise die zur Entschlüsselung der zu analysierenden Daten benötigten klassenabhängigen privaten kryptographischen Schlüssel umfassen oder diese identifizieren und dabei angeben, woher diese Schlüssel erlagt werden können. Der Auftrag kann, insbesondere wenn er die benötigten klassenabhängigen privaten kryptographischen Schlüssel umfasst, kryptographisch gesichert, insbesondere verschlüsselt sein. Zur Verschlüsselung kann beispielsweise ein öffentlicher kryptographischer Schlüssel des empfangenden Dienstcomputersystems verwendet werden. Ferner kann eine symmetrische Verschlüsselung und/oder eine Ende-zu-Ende-Verschlüsselung verwendet werden. Nach Ausführungsformen wird parallel zu dem Auftrag eine Freigabe an ein Key-Providercomputersystem gesendet, welches das der klassenbasierten Verschlüsslung zugrundeliegende Hauptschlüsselpaar umfasst. Alternativ kann der Auftrag eine entsprechende Freigabe umfassen, welche von dem mit der Analyse beauftragten Dienstcomputersystem an das die Hauptschlüssel verwaltende Key-Providercomputersystem weitergeleitet wird. Die Freigabe kann die benötigten klassenabhängigen privaten kryptographischen Schlüssel allgemein oder speziell für das mit der Analyse beauftragte Dienstcomputersystem freigeben. Zudem kann es sich um eine einmalige Freigabe oder um eine zeitlich unbefristete und/oder hinsichtlich der Anzahl der Abrufe der die benötigten klassenabhängigen privaten kryptographischen Schlüssel unbegrenzte Freigabe handeln. Hierbei können die benötigten klassenabhängigen privaten kryptographischen Schlüssel beispielweise auch der Identifizierung der zu analysierenden Daten dienen.

In Block 514 wird in Antwort auf das Versenden des Analyseauftrags von dem Nutzercomputersystem des Dateninhabers ein Analyseergebnis, beispielsweise in kryptographisch gesicherter Form, empfangen. Zur kryptographischen Sicherung kann beispielsweise ein öffentlicher kryptographischer Schlüssel des empfangenden Nutzercomputersystems verwendet werden. Ferner kann eine symmetrische Verschlüsselung und/oder eine Ende-zu-Ende-Verschlüsselung verwendet werden. Das Analyseergebnis beruht beispielsweise auf einer Analyse von Metadaten und identifiziert relevante Datenmengen. In Block 516 lädt das Nutzercomputersystem die als relevant identifizierten Datenmengen herunter. Nach weiteren Ausführungsformen werden die als relevant identifizierten Datenmengen zusammen mit dem Analyseergebnis in Schritt 514 übertragen. In Block 518 werden die relevanten Datenmengen mit dem klassenunabhängigen privaten kryptographischen Schlüssel des Dateninhabers entschlüsselt und in Block 520 ausgewertet. Sind die relevanten Datenmengen klassenabhängig verschlüsselt, werden sie in Block 518 mit einem oder mehreren entsprechenden klassenabhängigen privaten kryptographischen Schlüsseln entschlüsselt und in Block 520 ausgewertet.

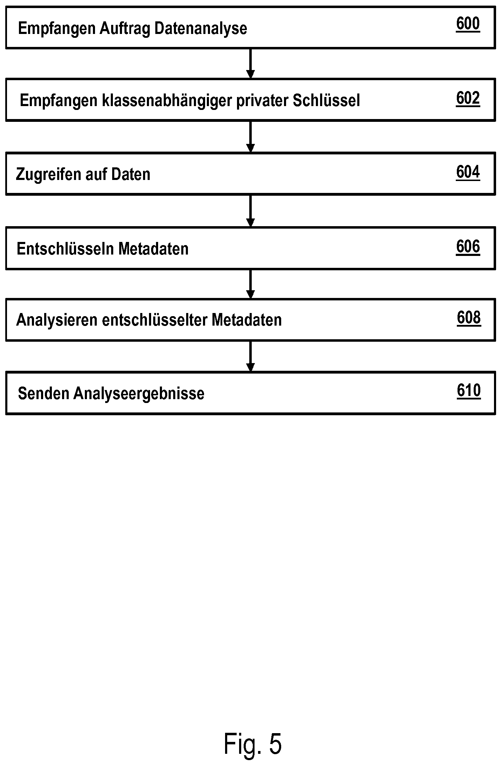

Figur 5 zeigt eine zweite Ausführungsform eines exemplarischen Verfahrens anhand eines schematischen Flussdiagramms. Figur 5 beschreibt die Verfahrensabläufe näher, welche zwischen Block 512 und 514 von Figur 4 durch das mit einer Analyse der verschlüsselt in der Cloud gespeicherten Daten beauftragte Dienstcomputersystem ausgeführt werden. In Block 600 empfängt das entsprechende Dienstcomputersystem den Auftrag zum Ausführen der Analyse. In Block 602 greift das mit der Analyse beauftragte Dienstcomputersystem auf die zur Entschlüsselung der zu analysierenden Daten benötigten klassenabhängigen privaten kryptographischen Schlüssel zu. Diese klassenabhängigen privaten kryptographischen Schlüssel werden beispielsweise von einem Nutzercomputersystem des Dateneigentümers bereitgestellt, welches die Analyse beauftragt hat. Nach weiteren Ausführungsformen werden die klassenabhängigen privaten kryptographischen Schlüssel von einem zentralen Key-Providercomputersystem bereitgestellt, welches das der klassenbasierten Verschlüsselung zugrundeliegende asymmetrische Hauptschlüsselpaar verwaltet. In Block 604 greift das mit der Analyse beauftragte Dienstcomputersystem auf die in der Cloud verschlüsselt gespeicherten Daten zu. Beispielsweise identifiziert der Auftrag zur Datenanalyse das Speichersystem, auf welchem die zu analysierenden verschlüsselten Daten gespeichert sind. Beispielsweise dienen die klassenabhängigen privaten kryptographischen Schlüssel auch zum Identifizieren der zu analysierenden Daten. Alle Daten bzw. Metadaten, welche sich mit den bereitgestellten klassenabhängigen privaten kryptographischen Schlüsseln entschlüsseln lassen, werden bei der Analyse berücksichtigt. In Block 606 werden beispielsweise die für die Analyse relevanten Metadaten entschlüsselt und in Block 608 analysiert. Die Ergebnisse der Analyse werden in Block 610 in Antwort auf den Analyseauftrag an das beauftragende Nutzercomputersystem gesendet. Nach Ausführungsformen identifizieren die Analyseergebnisse für detailliertere Datenauswertungen relevante verschlüsselte Datenmengen. Diese relevanten verschlüsselten Datenmengen werden nach Ausführungsformen in Schritt 610 zusammen mit den Analyseergebnissen versandt. Nach Ausführungsformen identifizieren die Analyseergebnisse die Klassen-IDs relevanter Klassen mit den relevanten Datenmengen.

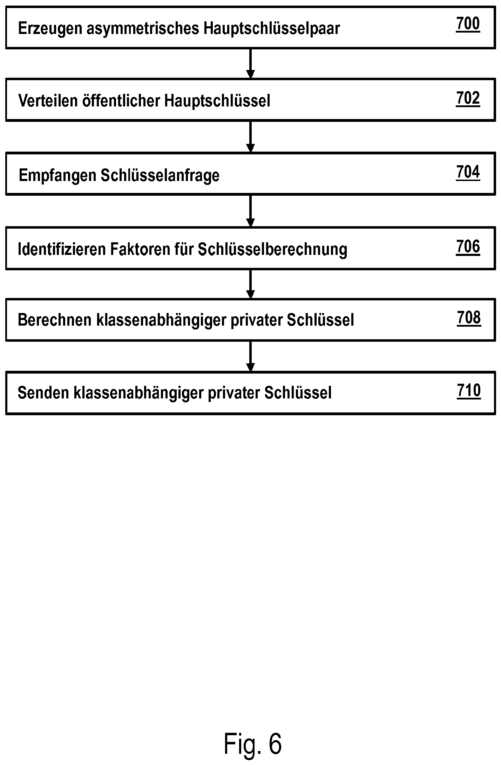

Figur 6 zeigt ein schematisches Flussdiagramm einer dritten Ausführungsform eines exemplarischen Verfahrens. Figur 6 beschreibt die Verfahrensabläufe zur Verwaltung des der klassenbasierten Verschlüsselung zugrundeliegenden asymmetrischen Hauptschlüsselpaars näher. In Block 700 wird das asymmetrische Hauptschlüsselpaar durch ein Key-Providercomputersystem erzeugt, bei welchem es sich beispielsweise um ein Computersystem einer zentralen und unabhängigen Instanz, wie etwa eines Trust Centers handelt. Nach Ausführungsformen erfolgt die Erzeugung des asymmetrischen Hauptschlüsselpaars auf Anfrage eines Dateneigentümers. Nach weiteren Ausführungsformen liegt das asymmetrische Hauptschlüsselpaar klassenbasierten Verschlüsselungen einer Mehrzahl von verschiedenen Daten verschiedener Dateneigentümer zugrunde. Nach weiteren Ausführungsformen erfolgt die Erzeugung des asymmetrischen Hauptschlüsselpaars durch ein Nutzercomputersystem des Dateneigentümers. In Block 702 wird der klassenunabhängige öffentliche kryptographische Hauptschlüssel des asymmetrischen Hauptschlüsselpaars verteilt. Beispielsweise wird der klassenunabhängige öffentliche kryptographische Hauptschlüssel auf entsprechende Anfragen hin an ein anfragendes Dienstcomputersystem gesendet. In Block 704 wird eine Schlüsselfrage zum Erzeugen und Bereitstellen eines oder mehrerer klassenabhängiger privater kryptographischer Schlüssel empfangen. Diese klassenabhängigen privaten kryptographischen Schlüssel sind klassenabhängigen öffentlichen kryptographischen Schlüsseln zugeordnet, d.h. bilden mit diesen klassenabhängige asymmetrische Schlüsselpaare. Die entsprechenden klassenabhängigen öffentlichen kryptographischen Schlüssel wurden unter Verwendung des verteilten klassenunabhängigen öffentlichen kryptographischen Hauptschlüssels berechnet. In Block 706 werden die für die Berechnung der klassenabhängigen privaten kryptographischen Schlüssel benötigten Faktoren, wie beispielsweise Klassen-IDs, Klassifikationsparameterwerte, Eigentümer-IDs und/oder Zeitangaben, identifiziert. Diese Faktoren werden beispielsweise durch denjenigen angegeben und/oder bereitgestellt, der die entsprechenden klassenabhängigen privaten kryptographischen Schlüssel anfragt. Beispielsweise werden die entsprechenden Faktoren mit der Anfrage mitgesendet. Nach weiteren Ausführungsformen besitzt das die Hauptschlüssel verwaltende Key-Providercomputersystem Zugriff auf das Klassifikationsschema und identifiziert entsprechende Faktoren anhand des Klassifikationsschemas. In Block 708 werden die klassenabhängigen privaten kryptographischen Schlüssel unter Verwendung der in Bock 706 identifizierten Faktoren und des klassenunabhängigen privaten kryptographischen Hauptschlüssels berechnet. In Block 710 werden die berechneten klassenabhängigen privaten kryptographischen Schlüssel schließlich in Antwort auf die Anfrage an das anfragende Computersystem und/oder ein anderes von dem anfragenden Computersystem identifiziertes Computersystem gesendet. Die Übersendung erfolgt beispielsweise in kryptographisch gesicherter Form. Zur kryptographischen Sicherung kann beispielsweise ein öffentlicher kryptographischer Schlüssel des empfangenden Computersystems verwendet werden. Ferner kann eine symmetrische Verschlüsselung und/oder eine Ende-zu-Ende-Verschlüsselung verwendet werden.

### Bezugszeichenliste

- 100: Eigentümer
- 102: Nutzercomputersystem
- 104: Speicher
- 106: Metadaten
- 108: Datenmenge
- 110: öffentlicher Hauptschlüssel
- 111: öffentlicher Schlüssel
- 112: Prozessor
- 114: Instruktionen
- 116: Klassifikator
- 118: kryptographisches Protokoll
- 122: Kommunikationsschnittstelle
- 150: Netzwerk
- 160: Kommunikationsverbindung
- 200: Speichersystem
- 202: Dienstcomputersystem
- 206: Metadaten
- 208: Datenmenge
- 209: Kommunikationsschnittstelle
- 210: privater Schlüssel
- 212: Prozessor
- 214: Instruktionen
- 218: kryptographisches Protokoll
- 220: Dienstprogramm
- 222: Kommunikationsschnittstelle
- 250: Cloud
- 302: Key-Providercomputersystem
- 304: Speicher
- 306: geschützter Speicherbereich
- 308: privater Hauptschlüssel
- 312: Prozessor
- 314: Instruktionen
- 316: Schlüsselgenerator
- 318: kryptographisches Protokoll
- 322: Kommunikationsschnittstelle
- 400: monohierarchische Klassifikationsstruktur
- 402: gewurzelter Baum
- 404: Hierarchieebene
- 406: Wurzel
- 408: Blatt
- 410: interner Knoten
- 412: Pfad von Wurzel zu Knoten
- 414: Pfad von Knoten zu Wurzel

## Patentansprüche

1. Verfahren zum Verarbeiten einer Datenmenge (108) durch ein Nutzercomputersystem (102), wobei das Verfahren umfasst:
Zuordnen der Datenmenge (108) zu einer ersten Klasse (408) eines Klassifikationsschemas, welches eine Mehrzahl von Klassen umfasst,
Versehen der Datenmenge (108) mit Metadaten (106), wobei die Metadaten (106) eine erste Klassen-ID einer Mehrzahl von Klassen-IDs umfassen, welche die erste Klasse (408) des Klassifikationsschemas identifiziert, der die Datenmenge (108) zugeordnet ist wobei das Verfahren durch die folgenden Schritte gekennzeichnet wird :
Verschlüsseln der Datenmenge (108) und der Metadaten (106), wobei zum Verschlüsseln der Metadaten (106) eine klassenbasierte Verschlüsselung mit einem klassenabhängigen ersten öffentlichen kryptographischen Schlüssel (110) verwendet wird, welcher unter Verwendung der Klassen-ID und eines klassenunabhängigen öffentlichen kryptographischen Hauptschlüssels (110) berechnet ist, wobei zum Verschlüsseln der Datenmenge (108) eine klassenunabhängige Verschlüsselung mit einem klassenunabhängigen zweiten öffentlichen kryptographischen Schlüssel verwendet wird.

2. Verfahren nach Anspruch 1, wobei jeder der Klassen jeweils ein individueller klassenabhängiger öffentlicher kryptographischer Schlüssel (110) zugeordnet ist, welcher unter Verwendung der Klassen-ID der entsprechenden Klasse und eines klassenunabhängigen öffentlichen kryptographischen Hauptschlüssels (110) berechnet ist, wobei derselbe öffentliche kryptographische Hauptschlüssel (110) zum Berechnen einer Mehrzahl der klassenabhängigen öffentlichen kryptographischen Schlüssel (110) verwendet wird.

3. Verfahren nach einem der vorangehenden Ansprüche, wobei das Klassifikationsschema eine monohierarchische Klassifikationsstruktur (400) aufweist, welche zumindest einen gewurzelten Baum (402) umfasst,
wobei den einzelnen Hierarchieebenen (404) der Klassifikationsstruktur (400) jeweils ein Klassifikationsparameter und den einzelnen Klassen (408, 410) der jeweiligen Hierarchieebene (404) jeweils ein Klassifikationsparameterwert zugeordnet ist,
wobei die Klassen-IDs der einzelnen Klassen (408, 410) jeweils die Klassifikationsparameterwerte umfassen, die den Klassen entlang des Pfads (412) von einer Wurzel (406) des Baums (402) bis zu der durch die entsprechende Klassen-ID identifizierten Klasse (408, 410) zugeordnet sind.

4. Verfahren nach Anspruch 3, wobei der klassenabhängige erste öffentliche kryptographische Schlüssel (110) zu einer Gruppe von öffentlichen kryptographischen Schlüsseln gehört, wobei jeder Klasse (408, 410) ein jeweiliger öffentlicher kryptographischer Schlüssel der Gruppe zugeordnet ist, wobei jeder der öffentlichen kryptographischen Schlüssel der Gruppe unter Verwendung des klassenunabhängigen öffentlichen kryptographischen Hauptschlüssels (110) und des von der Klassen-ID umfassten Klassifikationsparameterwerts der Klasse (408, 410) berechnet ist, welcher der entsprechende öffentliche kryptographische Schlüssel zugeordnet ist,
wobei jeder von den Metadaten (106) umfasste Klassifikationsparameterwert mit dem öffentlichen kryptographischen Schlüssel verschlüsselt wird, welcher der Klasse des entsprechenden Klassifikationsparameterwerts zugeordnet ist.

5. Verfahren nach Anspruch 4, wobei die Verschlüsselung der von den Metadaten (106) umfassten Klassifikationsparameterwerte in verschachtelter Form erfolgt, wobei mit verschlüsselten Klassifikationsparameterwert der ersten Klasse (408) beginnend einem Pfad (414) von der ersten Klasse (408) zu der Wurzel (406) des Baums (402) folgend jeweils das Ergebnis der letzten Verschlüsselung mit dem Klassifikationsparameterwert der nächsten Klasse der nächsthöheren Hierarchieebene kombiniert und mit dem öffentlichen kryptographischen Schlüssel verschlüsselt wird, welcher der entsprechenden nächsten Klasse zugeordnet ist.

6. Verfahren nach einem der vorangehenden Ansprüche, wobei das Nutzercomputersystem (102) den klassenunabhängigen öffentlichen kryptographischen Hauptschlüssel (110) umfasst und den klassenabhängigen ersten öffentlichen kryptographischen Schlüssel (110) unter Verwendung des klassenunabhängigen öffentlichen kryptographischen Hauptschlüssels (110) berechnet.

7. Verfahren nach einem der vorangehenden Ansprüche, wobei das Verfahren ferner umfasst:
Senden der verschlüsselten Datenmenge (108) und der verschlüsselten Metadaten (106) über ein Netzwerk (150) an ein Speichersystem (200), welches einen nichtflüchtigen Speicher umfasst,
Speichern der verschlüsselten Datenmenge (108) zusammen mit den verschlüsselten Metadaten (106) in dem nichtflüchtigen Speicher.

8. Verfahren nach Anspruch 7, wobei das Verfahren ferner umfasst:
Empfang eines klassenabhängigen ersten privaten kryptographischen Schlüssels (210) durch ein Dienstcomputersystem (202), welches Zugriff auf die verschlüsselten Metadaten (106) und/oder die verschlüsselte Datenmenge (108) besitzt, wobei der klassenabhängige erste private kryptographische Schlüssel (210) dem klassenabhängigen ersten öffentlichen kryptographischen Schlüssel (110) zugeordnet ist und mit diesem ein asymmetrisches Schlüsselpaar bildet,
Entschlüsseln der Metadaten (106) mit dem klassenabhängigen ersten privaten Schlüssel (210) durch das Dienstcomputersystem (202),
Verarbeiten der entschlüsselten Metadaten (106) durch das Dienstcomputersystem (202).

9. Verfahren nach Anspruch 8, wobei ein Key-Providercomputersystem (302) einen dem klassenunabhängigen öffentlichen kryptographischen Hauptschlüssel (110) zugeordneten klassenunabhängigen privaten kryptographischen Hauptschlüssel (308) umfasst,
wobei das Verfahren ferner umfasst:
Berechnen des klassenabhängigen ersten privaten kryptographischen Schlüssels (210) durch das Key-Providercomputersystem (302) unter Verwendung der Klassen-ID und des klassenunabhängigen privaten kryptographischen Hauptschlüssels (308),
Senden des klassenabhängigen ersten privaten kryptographischen Schlüssels (210) durch das Key-Providercomputersystem (302) an das Dienstcomputersystem (202).

10. Nutzercomputersystem (102) zum Verarbeiten einer Datenmenge (108), wobei das Nutzercomputersystem (102) einen Prozessor (112) und einen Speicher (104) mit maschinenlesbaren Instruktionen (114) umfasst, wobei ein Ausführen der maschinenlesbaren Instruktionen (114) durch den Prozessor (112) das Nutzercomputersystem (102) veranlasst zum:
Zuordnen der Datenmenge (108) zu einer Klasse (408) eines Klassifikationsschemas, welches eine Mehrzahl von Klassen umfasst,
Versehen der Datenmenge (108) mit Metadaten (106), wobei die Metadaten (106) eine Klassen-ID einer Mehrzahl von Klassen-IDs umfassen, welche die Klasse (408) des Klassifikationsschemas identifiziert, der die Datenmenge (108) zugeordnet ist, und **dadurch gekennzeichnet** wird, dass das Ausführen der maschinenlesbaren Instruktionen (114) durch den Prozessor (11) das Nutzercomputersystem (102) zu den folgenden weiteren Schritten veranlasst:
Verschlüsseln der Datenmenge (108) und der Metadaten (106), wobei zum Verschlüsseln der Metadaten (106) eine klassenbasierte Verschlüsselung mit einem klassenabhängigen öffentlichen kryptographischen Schlüssel (110) verwendet wird, welcher unter Verwendung der Klassen-ID und eines klassenunabhängigen öffentlichen kryptographischen Hauptschlüssels (110) berechnet ist, wobei zum Verschlüsseln der Datenmenge (108) eine klassenunabhängige Verschlüsselung mit einem klassenunabhängigen zweiten öffentlichen kryptographischen Schlüssel verwendet wird.

11. Dienstcomputersystem (202) zum Verarbeiten einer mit Metadaten (106) versehenen Datenmenge (108), wobei die Datenmenge einer Klasse (408) eines Klassifikationsschemas zugeordnet ist, welches eine Mehrzahl von Klassen umfasst, wobei die Metadaten (106) eine Klassen-ID einer Mehrzahl von Klassen-IDs umfassen, welche die Klasse (408) des Klassifikationsschemas identifiziert, der die Datenmenge (108) zugeordnet ist, wobei die Datenmenge (108) und die Metadaten (106) verschlüsselt sind, wobei zum Verschlüsseln der Metadaten (106) eine klassenbasierte Verschlüsselung mit einem klassenabhängigen öffentlichen kryptographischen Schlüssel (110) verwendet wurde, wobei zum Verschlüsseln der Datenmenge (108) eine klassenunabhängige Verschlüsselung mit einem klassenunabhängigen zweiten öffentlichen kryptographischen Schlüssel verwendet wurde,
wobei das Dienstcomputersystem (202) einen Prozessor (212) und einen Speicher (204) mit maschinenlesbaren Instruktionen (214) umfasst, wobei ein Ausführen der maschinenlesbaren Instruktionen (214) durch den Prozessor (212) das Dienstcomputersystem (202) veranlasst zum:
Empfangen eines klassenabhängigen privaten kryptographischen Schlüssels (210),
Zugreifen auf die verschlüsselten Metadaten (106),
Entschlüsseln der verschlüsselten Metadaten (106) mit dem klassenabhängigen privaten Schlüssel (210), wobei der klassenabhängige private kryptographische Schlüssel (210) dem klassenabhängigen öffentlichen kryptographischen Schlüssel (110) zugeordnet ist und mit diesem ein asymmetrisches Schlüsselpaar bildet,
Verarbeiten der entschlüsselten Metadaten (106).

12. Key-Providercomputersystem (302) zum Verwalten eines klassenunabhängigen privaten kryptographischen Hauptschlüssels (308) und Bereitstellen eines klassenabhängigen privaten kryptographischen Schlüssels (210), wobei das Key-Providercomputersystem (302) einen Prozessor (312) und einen Speicher (304) mit maschinenlesbaren Instruktionen (314) umfasst, wobei ein Ausführen der maschinenlesbaren Instruktionen (314) durch den Prozessor (312) das Key-Providercomputersystem (302) veranlasst zum:
Empfangen einer Anfrage zum Bereitstellen eines klassenabhängigen privaten kryptographischen Schlüssels (210) zum Verarbeiten einer mit Metadaten (106) versehenen Datenmenge (108), wobei der klassenabhängige private kryptographische Schlüssel (210) von einer Klasse (408) eines Klassifikationsschemas abhängig ist, welcher die Datenmenge (108) zugeordnet ist, wobei das Klassifikationsschema eine Mehrzahl von Klassen umfasst, wobei die Metadaten (106) eine Klassen-ID einer Mehrzahl von Klassen-IDs umfassen, welche die Klasse (408) des Klassifikationsschemas identifiziert, der die Datenmenge (108) zugeordnet ist, wobei die Datenmenge (108) und die Metadaten (106) verschlüsselt sind, wobei zum Verschlüssein der Metadaten (106) eine klassenbasierte Verschlüsselung mit einem klassenabhängigen öffentlichen kryptographischen Schlüssel (110) verwendet wurde, wobei zum Verschlüsseln der Datenmenge (108) eine klassenunabhängige Verschlüsselung mit einem klassenunabhängigen zweiten öffentlichen kryptographischen Schlüssel verwendet wurde,
Berechnen des klassenabhängigen privaten kryptographischen Schlüssels (210) unter Verwendung der Klassen-ID und des klassenunabhängigen privaten kryptographischen Hauptschlüssels (308),
Senden des klassenabhängigen privaten kryptographischen Schlüssels (210) in Antwort auf die empfangene Anfrage.

13. Key-Providercomputersystem (302) nach Anspruch 12, wobei das Key-Providercomputersystem (302) die Anfrage zum Bereitstellen des klassenabhängigen privaten kryptographischen Schlüssels (210) von einem Dienstcomputersystem (202) empfängt,
wobei die Anfrage ferner einen Berechtigungsnachweis des Dienstcomputersystems (202) zum Empfang des klassenabhängigen privaten kryptographischen Schlüssels (210) umfasst,
wobei das Key-Providercomputersystem (302) den empfangenen Berechtigungsnachweis auf seine Gültigkeit prüft und das Senden des klassenabhängigen privaten kryptographischen Schlüssels (210) auf eine erfolgreiche Prüfung hin an das anfragende Dienstcomputersystem (202) erfolgt.

14. Key-Providercomputersystem (302) nach Anspruch 12, wobei das Key-Providercomputersystem (302) die Anfrage zum Bereitstellen des klassenabhängigen privaten kryptographischen Schlüssels (210) von einem Dienstcomputersystem (202) empfängt,
wobei die Anfrage ein Nutzercomputersystem (102) zum Autorisieren der Bereitstellung des angefragten klassenabhängigen privaten kryptographischen Schlüssels (210) identifiziert,
wobei das Ausführen der maschinenlesbaren Instruktionen (314) das Key-Providercomputersystem (302) ferner veranlasst zum:
Senden einer Autorisierungsanfrage zur Autorisierung der Bereitstellung des angefragten klassenabhängigen privaten kryptographischen Schlüssels (210) an das identifizierte Nutzercomputersystem (102),
Empfangen einer Autorisierungsbestätigung von dem identifizierten Nutzercomputersystem (102) in Antwort auf die gesendete Autorisierungsanfrage,
Prüfen der empfangenen Autorisierungsbestätigung auf ihre Gültigkeit, wobei das Senden des klassenabhängigen privaten kryptographischen Schlüssels (210) auf eine erfolgreiche Prüfung hin an das anfragende Dienstcomputersystem (202) erfolgt.

15. Key-Providercomputersystem (302) nach Anspruch 14, wobei die Anfrage oder die Autorisierungsbestätigung den durch das Key-Providercomputersystem (302) zu berechnenden klassenabhängigen privaten kryptographischen Schlüssel (210) identifiziert.

16. Key-Providercomputersystem (302) nach Anspruch 12, wobei das Key-Providercomputersystem (302) die Anfrage zum Bereitstellen des klassenabhängigen privaten kryptographischen Schlüssels (210) von einem Nutzercomputersystem (102) empfängt,
wobei die Anfrage ein Dienstcomputersystem (202) identifiziert, an welches der angefragte klassenabhängige private kryptographische Schlüssel (210) zu senden ist,
wobei die Anfrage ferner einen Berechtigungsnachweis des Nutzercomputersystems (202) zum Senden des klassenabhängigen privaten kryptographischen Schlüssels (210) umfasst,
wobei das Key-Providercomputersystem (302) den empfangenen Berechtigungsnachweis auf seine Gültigkeit prüft und das Senden des klassenabhängigen privaten kryptographischen Schlüssels (210) auf eine erfolgreiche Prüfung hin an das identifizierte Dienstcomputersystem (202) erfolgt.

17. Key-Providercomputersystem (302) nach einem der Ansprüche 12 bis 16, wobei das Ausführen der maschinenlesbaren Instruktionen (314) das Key-Providercomputersystem (302) ferner veranlasst zum:
Erzeugen des von dem Key-Providercomputersystem (302) verwalteten klassenunabhängigen privaten kryptographischen Hauptschlüssels (308) zusammen mit einem dem klassenunabhängigen privaten kryptographischen Hauptschlüssel (308) zugeordneten klassenunabhängigen öffentlichen kryptographischen Hauptschlüssel (110),
Speichern des klassenunabhängigen privaten kryptographischen Hauptschlüssels (308) in dem Speicher (304),
Senden des klassenunabhängigen öffentlichen kryptographischen Hauptschlüssels (110) an ein Nutzercomputersystem (102).

## Claims

1. Method for processing a data set (108) using a user computer system (102), wherein the method comprises:
allocating the data set (108) to a first class (408) of a classification scheme, which contains a plurality of classes,
providing the data set (108) with metadata (106), the metadata (106) containing a first class ID from a plurality of class IDs which identifies the first class (408) of the classification scheme to which the data set (108) is allocated, the method being **characterized by** the following steps:
encrypting the data set (108) and the metadata (106), class-based encryption using a class-dependent first cryptographic public key (110) being used to encrypt the metadata (106), which key is calculated using the class ID and a class-independent cryptographic public main key (110), class-independent encryption using a class-independent second cryptographic public key being used to encrypt the data set (108).

2. Method according to claim 1, wherein an individual, class-dependent cryptographic public key (110), which is calculated using the class ID of the corresponding class and a class-independent cryptographic public main key (110), is allocated to each of the classes, the same cryptographic public main key (110) being used to calculate a plurality of the class-dependent cryptographic public keys (110).

3. Method according to any of the preceding claims, wherein the classification scheme has a monohierarchical classification structure (400), which contains at least one rooted tree (402),
wherein a classification parameter is allocated to each of the individual hierarchical levels (404) of the classification structure (400) and a classification parameter value is allocated to each of the individual classes (408, 410) of the relevant hierarchical level (404),
wherein the class IDs of the individual classes (408, 410) each contain the classification parameter values that are allocated to the classes along the path (412) from a root (406) of the tree (402) to the class (408, 410) identified by the corresponding class ID.

4. Method according to claim 3, wherein the class-dependent first cryptographic public key (110) belongs to a group of cryptographic public keys, a relevant cryptographic public key in the group being allocated to each class (408, 410), each of the cryptographic public keys in the group being calculated using the class-independent cryptographic public main key (110) and the classification parameter value, contained in the class ID, of the class (408, 410) to which the corresponding cryptographic public key is allocated,
wherein each classification parameter value contained in the metadata (106) is encrypted with the cryptographic public key which is allocated to the class of the corresponding classification parameter value.

5. Method according to claim 4, wherein the classification parameter values contained in the metadata (106) are encrypted in a nested form, wherein, beginning with the encrypted classification parameter value of the first class (408), following a path (414) from the first class (408) to the root (406) of the tree (402), the result of the last encryption is combined with the classification parameter value of the next class of the next hierarchical level up in each case and is encrypted with the cryptographic public key to which the corresponding next class is allocated.

6. Method according to any of the preceding claims, wherein the user computer system (102) contains the class-independent cryptographic public main key (110) and the class-dependent first cryptographic public main key (110) is calculated using the class-independent cryptographic public main key (110).

7. Method according to any of the preceding claims, wherein the method further comprises:
transmitting the encrypted data set (108) and the encrypted metadata (106) over a network (150) to a memory system (200), which comprises a non-volatile memory,
storing the encrypted data set (108) together with the encrypted metadata (106) in the non-volatile memory.

8. Method according to claim 7, wherein the method further comprises:
receiving a class-dependent first cryptographic private key (210) by means of a service computer system (202) which has access to the encrypted metadata (106) and/or the encrypted data set (108), the class-dependent first cryptographic private key (210) being allocated to the class-dependent first cryptographic public key (110) and forming an asymmetrical key pair therewith,
decrypting the metadata (106) with the class-dependent first private key (210) by means of the service computer system (202),
processing the decrypted the metadata (106) by means of the service computer system (202).

9. Method according to claim 8, wherein a key-provider computer system (302) containing a class-independent cryptographic private main key (308) allocated to the class-independent cryptographic public main key (110),
wherein the method further comprises:
calculating the class-dependent first cryptographic private key (210) by means of the key-provider computer system (302) using the class ID and the class-independent cryptographic private main key (308),
transmitting the class-dependent first cryptographic private key (210) by means of the key-provider computer system (302) to the service computer system (202).

10. User computer system (102) for processing a data set (108), wherein the user computer system (102) comprises a processor (112) and a memory (104) having machine-readable instructions (114), execution of the machine-readable instructions (114) by the processor (112) prompting the user computer system (102) to:
allocate the data set (108) to a class (408) of a classification scheme, which contains a plurality of classes,
provide the data set (108) with metadata (106), the metadata (106) containing a class ID from a plurality of class IDs which identifies the class (408) of the classification scheme to which the data set (108) is allocated, and is **characterized in that** the machine-readable instructions (114) being performed by the processor (11) prompts the user computer system (102) to perform the following additional steps of:
encrypting the data set (108) and the metadata (106), class-based encryption using a class-dependent cryptographic public key (110) being used to encrypt the metadata (106), which key is calculated using the class ID and a class-independent cryptographic public main key (110), class-independent encryption using a class-independent second cryptographic public key being used to encrypt the data set (108).

11. Service computer system (202) for processing a data set (108) provided with metadata (106), the data set being allocated to a class (408) of a classification scheme, which contains a plurality of classes, the metadata (106) containing a class ID from a plurality of class IDs which identifies the class (408) of the classification scheme to which the data set (108) is allocated, the data set (108) and the metadata (106) being encrypted, class-based encryption using a class-dependent cryptographic public key (110) having been used to encrypt the metadata (106), class-independent encryption using a class-independent second cryptographic public key having been used to encrypt the data set (108),
the service computer system (202) comprising a processor (212) and a memory (204) having machine-readable instructions (214), execution of the machine-readable instructions (214) by the processor (212) prompting the service computer system (202) to:
receive a class-dependent cryptographic private key (210),
access the encrypted metadata (106),
decrypt the encrypted metadata (106) using the class-dependent private key (210), the class-dependent cryptographic private key (210) being allocated to the class-dependent cryptographic public key (110) and forming an asymmetrical key pair therewith,
process the decrypted the metadata (106).

12. Key-provider computer system (302) for managing a class-independent cryptographic private main key (308) and providing a class-dependent cryptographic private key (210), wherein the key-provider computer system (302) comprises a processor (312) and a memory (304) having machine-readable instructions (314), execution of the machine-readable instructions (314) by the processor (312) prompting the key-provider computer system (302) to:
receive a request for providing a class-dependent cryptographic private key (210) for processing a data set (108) provided with metadata (106), the class-dependent cryptographic private key (210) being dependent on a class (408) of a classification scheme to which the data set (108) is allocated, the classification scheme containing a plurality of classes, the metadata (106) containing a class ID from a plurality of class IDs which identifies the class (408) of the classification scheme to which the data set (108) is allocated, the data set (108) and the metadata (106) being encrypted, class-based encryption using a class-dependent cryptographic public key (110) having been used to encrypt the metadata (106), class-independent encryption using a class-independent second cryptographic public key having been used to encrypt the data set (108),
calculate the class-dependent cryptographic private key (210) using the class ID and the class-independent cryptographic private main key (308),
transmit the class-dependent cryptographic private key (210) in response to the received request.

13. Key-provider computer system (302) according to claim 12, wherein the key-provider computer system (302) receives the request for providing the class-dependent cryptographic private key (210) from a service computer system (202),
wherein the request also contains a credential of the service computer system (202) for receiving the class-dependent cryptographic private key (210),
wherein the key-provider computer system (302) checks the validity of the received credential and transmits the class-dependent cryptographic private key (210) to the requesting service computer system (202) in the event of a successful check.

14. Key-provider computer system (302) according to claim 12, wherein the key-provider computer system (302) receives the request for providing the class-dependent cryptographic private key (210) from a service computer system (202),
wherein the request identifies a user computer system (102) for authorizing the provision of the requested class-dependent cryptographic private key (210),
wherein the execution of the machine-readable instructions (314) also prompts the key-provider computer system (302) to:
transmit an authorization request for authorizing the provision of the requested class-dependent cryptographic private key (210) to the identified user computer system (102),
receive an authorization confirmation from the identified user computer system (102) in response to the transmitted authorization request,
check the validity of the received authorization confirmation, the class-dependent cryptographic private key (210) being transmitted to the requesting service computer system (202) in the event of a successful check.

15. Key-provider computer system (302) according to claim 14, wherein the request or the authorization confirmation identifies the class-dependent cryptographic private key (210) to be calculated by the key-provider computer system (302).

16. Key-provider computer system (302) according to claim 12, wherein the key-provider computer system (302) receives the request for providing the class-dependent cryptographic private key (210) from a user computer system (102),
wherein the request identifies a service computer system (202) to which the requested class-dependent cryptographic private key (210) is to be transmitted,
wherein the request also contains a credential of the user computer system (202) for transmitting the class-dependent cryptographic private key (210),
wherein the key-provider computer system (302) checks the validity of the received credential and transmits the class-dependent cryptographic private key (210) to the identified service computer system (202) in the event of a successful check.

17. Key-provider computer system (302) according to any of claims 12 to 16, wherein the execution of the machine-readable instructions (314) also prompts the key-provider computer system (302) to:
generate the class-independent cryptographic private main key (308) managed by the key-provider computer system (302) together with a class-independent cryptographic public main key (110) allocated to the class-independent cryptographic private main key (308),
store the class-independent cryptographic private main key (308) in the memory (304),
transmit the class-independent cryptographic public main key (110) to a user computer system (102).

## Revendications

1. Procédé de traitement d'un volume de données (108) par un système informatique utilisateur (102), le procédé comprenant :
l'affectation du volume de données (108) à une première classe (408) d'un schéma de classification, lequel comprend une multiplicité de classes,
l'attribution de métadonnées (106) au volume de données (108), où les métadonnées (106) comprennent un premier ID de classe parmi une multiplicité d'ID de classes, lequel identifie la première classe (408) du schéma de classification, auquel le volume de données (108) est associé, le procédé étant **caractérisé par** les étapes suivantes :
le chiffrement du volume de données (108) et des métadonnées (106), où, pour le chiffrement des métadonnées (106), on emploie un chiffrement basé sur la classe avec une première clé cryptographique publique (110) dépendante de la classe, laquelle est calculée moyennant l'emploi de l'ID de classe et d'une clé principale cryptographique publique (110) indépendante de la classe, où, pour le chiffrement du volume de données (108), on emploie une deuxième clé cryptographique publique indépendante de la classe.

2. Procédé selon la revendication 1, dans lequel, à chacune des classes est respectivement associée une clé cryptographique publique (110) individuelle dépendante de la classe, laquelle est calculée moyennant l'emploi de l'ID de classe de la classe correspondante et d'une clé principale cryptographique publique (110) indépendante de la classe, dans lequel la même clé principale cryptographique publique (110) est employée pour le calcul d'une multiplicité de clés cryptographiques publiques (110) dépendantes de la classe.

3. Procédé selon l'une des revendications précédentes, dans lequel le schéma de classification présente une structure de classification (400) mono hiérarchique, laquelle comprend au moins une arborescence (402) enracinée,
dans lequel un paramètre de classification est respectivement associée aux plans hiérarchiques (404) individuels de la structure de classification (400) et une valeur de paramètre de classification est respectivement associée aux classes (408, 410) individuelles du plan hiérarchique (404) respectif,
dans lequel les ID de classes des classes (408, 410) individuelles comprennent respectivement les valeurs de paramètres de classification qui sont associées aux classes le long du parcours (412) partant d'une racine (406) de l'arborescence (402) jusqu'à la classe (408, 410) identifiée par l'ID de classe correspondante.

4. Procédé selon la revendication 3, dans lequel la première clé cryptographique publique (110) dépendante de la classe fait partie d'un groupe de clés cryptographiques publiques, dans lequel une clé cryptographique publique respective du groupe est associée à chaque classe (408, 410), dans lequel chacune des clés cryptographiques publiques du groupe est calculée moyennant l'emploi de la clé principale cryptographique publique (110) indépendante de la classe et de la valeur du paramètre de classification de la classe (408, 410) comprise par l'ID de classe, laquelle est associée à la clé cryptographique publique correspondante,
dans lequel chaque valeur de paramètre de classification compris par les métadonnées (106) est chiffrée avec la clé cryptographique publique, laquelle est associée à la classe de la valeur de paramètre de classification correspondante.

5. Procédé selon la revendication 4, dans lequel le chiffrement des valeurs de paramètres de classification comprises dans les métadonnées (106) a lieu sous forme complexe, dans lequel, en commençant avec une valeur de paramètre de classification chiffrée de la première classe (408), en suivant un parcours (414) de la première classe (408) jusqu'à la racine (406) de l'arborescence (402), respectivement le résultat du dernier chiffrement est combiné avec la valeur du paramètre de classification de la classe suivante du plan hiérarchique plus élevé le plus proche et est chiffré avec la clé cryptographique publique, laquelle est associée à la classe suivante correspondante.

6. Procédé selon l'une des revendications précédentes, dans lequel le système informatique utilisateur (102) comprend la clé principale cryptographique publique indépendante de la classe (110) et calcule la première clé cryptographique publique dépendante de la classe (110) moyennant l'emploi de la clé principale cryptographique publique indépendante de la classe (110).

7. Procédé selon l'une des revendications précédentes, le procédé comprenant en outre :
l'envoi du volume de données (108) chiffré et des métadonnées (106) chiffrées par le biais d'un réseau (150) à un système de mémoire (200), lequel comprend une mémoire non volatile,
l'enregistrement du volume de données (108) chiffrées conjointement avec les métadonnées (106) chiffrées dans la mémoire non volatile.

8. Procédé selon la revendication 7, le procédé comprenant en outre :
la réception d'une première clé cryptographique privée (210) dépendante de la classe par un système informatique de service (202), lequel possède un accès aux métadonnées (106) chiffrées e/ou au volume de données (108) chiffré, dans lequel la première clé cryptographique privée (210) dépendante de la classe est associée à la première clé cryptographique publique (110) dépendante de la classe et forme avec celle-ci une paire de clés asymétrique,
le déchiffrement des métadonnées (106) ave la première clé privée (210) dépendante de la classe par le système informatique de service (202),
le traitement des métadonnées (106) déchiffrées par le système informatique de service (202).

9. Procédé selon la revendication 8, dans lequel un système informatique fournisseur de clés (302) comprend une clé principale cryptographique privée (308) indépendante de la classe associée à la clé principale cryptographique publique (110) indépendante de la classe,
le procédé comprenant en outre :
le calcul de la première clé cryptographique privée (210) dépendante de la classe par le système informatique fournisseur de clés (302) moyennant l'emploi de l'ID de classe et de la clé principale cryptographique privée (308) indépendante de la classe,
l'envoi de la première clé cryptographique privée (210) dépendante de la classe au système informatique de service (202) par le système informatique fournisseur de clés (302).

10. Système informatique utilisateur (102) permettant le traitement d'un volume de données (108), où le système informatique utilisateur (102) comprend un processeur (112) et une mémoire (104) avec des instructions (114) lisibles par machine, dans lequel une exécution des instructions (114) lisibles par machine par le processeur (112) fait en sorte que le système informatique utilisateur (102) :
affecte le volume de données (108) à une classe (408) d'un schéma de classification, lequel comprend une multiplicité de classes,
attribue des métadonnées (106) au volume de données (108), où les métadonnées ((106) comprennent un ID de classe parmi une multiplicité d'ID de classes, lequel identifie la première classe (408) du schéma de classification, auquel le volume de données (108) est associé, et est **caractérisé en ce que** l'exécution des instructions (114) lisibles par machine par le processeur (11) fait en sorte que le système informatique utilisateur (102), par les étapes suivantes :
effectue chiffrement du volume de données (108) et des métadonnées (106), où, pour le chiffrement des métadonnées (106), on emploie un chiffrement basé sur la classe avec une clé cryptographique publique (110) dépendante de la classe, laquelle est calculée moyennant l'emploi de l'ID de classe et d'une clé principale cryptographique publique (110) indépendante de la classe, où, pour le chiffrement du volume de données (108), on emploie une deuxième clé cryptographique publique indépendante de la classe.

11. Système informatique de service (202) permettant le traitement d'un volume de données (108) pourvu de métadonnées (106), dans lequel le volume de données d'une classe (408) est associé à un schéma de classification, lequel comprend une multiplicité de classes, dans lequel les métadonnées (106) comprennent un ID de classe parmi une multiplicité d'ID de classe, lequel identifient la classe (408) du schéma de classification qui est associée au volume de données (108), dans lequel le volume de données (108) et les métadonnées (106) sont chiffrées, dans lequel, pour le chiffrement des métadonnées (106), on emploie un chiffrement basé sur la classe avec une clé cryptographique publique (110) dépendante de la classe, dans lequel, pour le chiffrement du volume de données (108), on a employé un chiffrement indépendant de la classe avec une deuxième clé cryptographique publique indépendante de la classe,
dans lequel le système informatique de service (202) comprend un processeur (212) et une mémoire (204) avec des instructions (214) lisibles par machine, dans lequel une exécution des instructions (214) lisibles par machine par le processeur (212) fait en sorte que le système informatique de service (202) :
réceptionne une clé cryptographique privée (210) dépendante de la classe,
accède aux métadonnées (106) chiffrées,
déchiffre les métadonnées (106) chiffrées avec la clé privée (210) dépendante de la classe, où la clé cryptographique privée (210) dépendante de la classe est associée à la clé cryptographique publique (110) dépendante de la classe et forme avec celle-ci une paire de clés asymétrique,
traite les métadonnées (106) déchiffrées.

12. Système informatique fournisseur de clés (302) permettant de gérer une clé principale cryptographique privée (308) indépendante de la classe et de mettre au point une clé cryptographique privée (210) dépendante de la classe, où le système informatique fournisseur de clés (302) comprend un processeur (312) et une mémoire (304) avec des instructions (314) lisibles par machine, dans lequel une exécution des instructions (314) lisibles par machine par le processeur (312) fait en sorte que le système informatique fournisseur de clés (302) :
réceptionne une demande pour la mise au point d'une clé cryptographique privée (210) dépendante de la classe permettant le traitement d'un volume de données (108) pourvu de métadonnées (106), dans lequel la clé cryptographique privée (210) dépendante de la classe est dépendante d'une classe (408) d'un schéma de classification, lequel est associé au volume de données (108), dans lequel le schéma de classification comprend une multiplicité de classes, dans lequel les métadonnées (106) comprennent un ID de classe parmi une multiplicité d'ID de classe, lequel identifie la classe (408) du schéma de classification qui est associé au volume de données (108), dans lequel le volume de données (108) et les métadonnées (106) sont chiffrés, dans lequel, pour le chiffrement des métadonnées (106), on emploie un chiffrement basé sur la classe avec une clé cryptographique publique (110) dépendante de la classe, dans lequel, pour le chiffrement du volume de données (108), on a employé un chiffrement indépendant de la classe avec une deuxième clé cryptographique publique indépendante de la classe,
calcule la clé cryptographique privée (210) dépendante de la classe moyennant l'emploi de l'ID de classe et de la clé principale cryptographique privée (308) indépendante de la classe,
envoie la clé cryptographique privée (210) dépendante de la classe en réponse à la demande reçue.

13. Système informatique fournisseur de clés (302) selon la revendication 12, où le système informatique fournisseur de clés (302) reçoit la demande pour la mise au point de la clé cryptographique privée (210) dépendante de la classe par un système informatique de service (202),
dans lequel la demande comprend en outre un avis d'autorisation du système informatique de service (202) pour la réception de la clé cryptographique privée (210) dépendante de la classe,
dans lequel le système informatique fournisseur de clés (302) vérifie l'avis d'autorisation reçu en ce qui concerne sa validité et l'envoi de la clé cryptographique privée (210) dépendante de la classe vers le système informatique de service (202) demandeur a lieu suite à une vérification réussie.

14. Système informatique fournisseur de clés (302) selon la revendication 12, où le système informatique fournisseur de clés (302) reçoit la demande pour la mise au point de la clé cryptographique privée (210) dépendante de la classe par un système informatique de service (202),
dans lequel la demande identifie un système informatique utilisateur (102) permettant d'autoriser la mise au point de la clé cryptographique privée (210) dépendante de la classe,
dans lequel une exécution des instructions (314) lisibles par machine fait en sorte que le système informatique fournisseur de clés (302) exécute en outre :
l'envoi d'une demande d'autorisation permettant l'autorisation de la mise au point de la clé cryptographique privée (210) dépendante de la classe demandée au système informatique utilisateur (102) identifié,
la réception d'une confirmation d'autorisation du système informatique utilisateur (102) identifié en réponse à la demande d'autorisation envoyée,
la vérification de la confirmation d'autorisation reçue en ce qui concerne sa validité, où l'envoi de la clé cryptographique privée (210) dépendante de la classe au système informatique de service (202) demandeur a lieu suite à une vérification réussie.

15. Système informatique fournisseur de clés (302) selon la revendication 14, dans lequel la demande ou la confirmation d'autorisation identifie la clé cryptographique privée (210) dépendante de la classe à calculer par le système informatique fournisseur de clés (302).

16. Système informatique fournisseur de clés (302) selon la revendication 12, où le système informatique fournisseur de clés (302) reçoit la demande pour la mise au point de la clé cryptographique privée (210) dépendante de la classe par un système informatique utilisateur (102),
dans lequel la demande identifie un système informatique de service (202) auquel la clé cryptographique privée (210) dépendante de la classe demandée doit être envoyée,
dans lequel la demande comprend en outre un avis d'autorisation du système informatique utilisateur (202) pour l'envoi de la clé cryptographique privée (210) dépendante de la classe,
où le système informatique fournisseur de clés (302) vérifie l'avis d'autorisation reçu en ce qui concerne sa validité et l'envoi de la clé cryptographique privée (210) dépendante de la classe au système informatique de service (202) identifié a lieu suite à une vérification réussie.

17. Système informatique fournisseur de clés (302) selon l'une des revendications 12 à 16, dans lequel l'exécution des instructions (314) lisibles par machine fait en outre que le système informatique fournisseur de clés (302) :
crée la clé principale cryptographique privée (308) indépendante de la classe gérée par le système informatique fournisseur de clés (302) conjointement avec une clé principale cryptographique publique (110) indépendante de la classe associée à la clé cryptographique privée (308) indépendante de la classe,
enregistre la clé principale cryptographique privée (308) indépendante de la classe dans la mémoire (304),
envoie la clé principale cryptographique publique (110) indépendante de la classe à un système informatique utilisateur (102).
